# EUROPEAN PATENT SPECIFICATION

(11) **EP 4 155 782 B1**
(45) Date of publication and mention of the grant of the patent: **03.04.2024**
(21) Application number: 22186909.2
(22) Date of filing: 30.08.2018
(51) Int. Cl.: G01V 8/00, G06F 3/01, G01S 13/42, G01S 13/72, G01S 13/86, G01S 13/88, G01S 15/42, G01S 15/66, G01S 15/88

(54) **SYSTEMS AND METHODS OF ULTRASONIC SENSING IN SMART DEVICES**
SYSTEME UND VERFAHREN ZUR ULTRASCHALLERFASSUNG IN INTELLIGENTEN VORRICHTUNGEN
SYSTÈMES ET PROCÉDÉS DE DÉTECTION D'ULTRASONS DANS DES DISPOSITIFS INTELLIGENTS

(30) Priority: 05.06.2018 US 201862680982 P
(43) Date of publication of application: 29.03.2023
(62) Divisional of application: 18778632.2
(73) Proprietor: Google LLC, Mountain View, CA 94043 (US)
(72) Inventor: SHIN, Dongeek, Mountain View, 94043 (US); NONGPIUR, Rajeev, Mountain View, 94043 (US); LI, Wei, Mountain View, 94043 (US); GUO, Jian, Mountain View, 94043 (US); WONG, Jennifer, Yeelam, Mountain View, 94043 (US); FELCH, Andrew, Christopher, Mountain View, 94043 (US); TOBIN, James, Paul, Mountain View, 94043 (US); GAO, Lu, Mountain View, 94043 (US); SILVERSTEIN, Brian, Mountain View, 94043 (US)
(74) Representative: Maikowski & Ninnemann Patentanwälte Partnerschaft mbB

(56) References cited:
- US-A1- 2013 154 930
- US-A1- 2015 304 470
- US-A1- 2017 328 997

## Description

### TECHNICAL FIELD

This relates generally to ultrasonic sensing, including but not limited to, utilizing ultrasound in a smart home environment.

### BACKGROUND

Audio devices having microphones and speakers are used extensively. In particular, usage of audio devices in residential and commercial environments has increased substantially, in part due to lower prices.

As consumer demands change and the complexity of home automation and related systems increases, various new challenges, such as occupancy and positioning detection, arise in designing such audio products. For example, audio devices use excess energy to constantly monitor for audio inputs such as key words, or require manual user interaction to "wake up" prior to receiving audio inputs. As another example, audio devices require manual user interaction to adjust volume and directionality in accordance with the user's relative positioning and the audio background.

US 2015/304470 A1 discloses "A hands-free intercom" which "may include a user-tracking sensor, a directional microphone, a directional sound emitter, and a communication interface. The user-tracking sensor may determine a location of a user so the directional microphone can measure vocal emissions by the user and the directional sound emitter can deliver audio to the user. The hands-free intercom may determine whether the user is communicatively coupled via a mobile device to a remote entity. The hands-free intercom may be configured to receive a handoff of the communicative coupling, for example, by acting as a peripheral of the mobile device, by requesting the handoff, and/or the like. The hands-free intercom may be configured to deliver communications from the user to an appliance and vice versa. The hands-free intercom may manage access rights of the various entities to prevent unauthorized communications."

US 2017/328997 A1 discloses "methods, devices, and systems for utilizing radar in smart devices. In one aspect, an electronic device includes: (1) circuit boards; (2) a housing encasing the circuit boards; (3) a communications module coupled to the circuit boards, including one or more antennas and configured for communicating with remote devices; (4) a radar module coupled to the circuit boards, configured for generating radar data for a home environment and including: (a) low power radar transmitters; and (b) radar receivers; (5) one or more processors mounted to one of the circuit boards, the processors configured to: (a) govern operation of the communications module and the radar module; (b) determine location and/or movement of detected objects in the home environment; and (c) detect anomalies associated with the detected objects; and (6) a power source coupled to the processors, the communications module, and the radar module."

### SUMMARY

Accordingly, there is a need for systems and/or devices with more efficient, accurate, and intuitive methods for sensing and interacting with users. The proposed solution is specified by a first independent claim referring to a method (claim 1), a second independent claim referring to an audio device (claim 7) and a third independent claim referring to a non-transitory computer-readable storage medium (claim 13). Such systems, devices, and methods optionally complement or replace conventional systems, devices, and methods for sensing and interacting with users.

The disclosed methods enable a wide array of electronic devices to use sound navigation and ranging (SONAR) by modifying the operation of audible microphones and speakers existing on devices. By enabling SONAR in this way, the present disclosure solves the engineering problem of intelligent human sensing and scene understanding in a cost-effective manner. The disclosed SONAR systems optionally capture human static occupancy, proximity, human breathing rates, over-the-air gestures such as waving hands, and relative room temperature profiles by time-of-flight differentials. Another advantage is that the use of SONAR in this manner is inexpensive (no additional hardware required), since modified software may be used to push the audio hardware's operating band to the ultrasonic regime, which is inaudible and reflective in natural scenes, and thus a prime mode for human sensing. Another advantage is that detecting users via SONAR allows the device to modulate outgoing signals (e.g., outgoing ultrasonic and audible signals) based on the users' proximity thereby saving energy and reducing interference between devices.

The present disclosure describes an ultrasonic sensing system (e.g., SONAR) enabled by audible-range audio hardware in accordance with some implementations. One advantage of using the ultrasonic sensing system is being able to detect and interpret human breathing cues to better assist a user. Another advantage is being able to deliver human sensing features (e.g., user proximity) while using no specialized hardware (e.g., only audio software modifications). For example, an audio assistant device may use a same set of microphones and speakers to audibly communication with nearby persons (e.g., play music, engage in conversations, listen for instructions, etc.) and to perform ultrasonic sensing. As another example, a display assistant may present audiovisual content while concurrently using the same speakers to perform ultrasonic sensing.

In accordance with some implementations, an electronic device (e.g., an audio device and/or smart device) having one or more microphones and speakers is configured to audibly (e.g., verbally) interact with a user and, while doing so, send and receive ultrasonic pulses (e.g., having frequencies at or above 20 kHz). As an example, the ultrasonic pulses can be used to determine the user's relative position, and enable the device to adjust operation accordingly. Adjusting operation may include adjusting volume levels and/or directionality, e.g., an audio device with multiple speakers may select the speaker facing the user's direction to communicate with the user. A device with multiple microphones may assign a subset of the microphones to the user based on the user's position. Adjusting operation based on the user's position allows the audio device to conserve energy (and extend battery life), reduce audio interference with other nearby persons and/or audio devices, and provide a better user experience.

In accordance with some implementations, a smart device (e.g., an audio device) includes multiple types of sensors, such as passive infrared (PIR) sensors, ambient light sensors (ALS), microphones (e.g., for audible and/or ultrasound sensing), image sensors, radar modules, and wireless communication (Wi-Fi) signal analysis modules. The sensors are optionally configured to work together to complete tasks. For example, the smart device may operate in a low power mode where some of the sensors are disabled (e.g., the image sensor, radar module, ultrasound module, etc.). In this example, the smart device may use a low power sensor, such as a PIR sensor or ALS, to detect motion and then "wake up," e.g., activate one or more of the disabled sensors. A specific example would be detecting motion with a PIR sensor and then enabling a camera, radar module, or ultrasound module to characterize and/or track the motion. As another example, in a low light situation, the smart device may detect motion via Wi-Fi signal analysis and then enable the radar module, ultrasound module, or lights (e.g., IR LEDs) and the camera to characterize and/or track the motion.

In accordance with some implementations, a plurality of smart devices are communicatively coupled to one another. The smart devices may include a variety of device types with distinct device capabilities. In some implementations, the smart devices work together to detect, characterize, and respond to events. For example, one or more of the smart devices may receive a request from a user. In this example, the request is processed and a visual and/or audible response is identified. To present the response to the user, the smart devices determine a location of the user (e.g., via radar or ultrasound), determine relative positioning of other smart devices (e.g., via Wi-Fi signal analysis), identify any obstructions between the smart devices and the user (e.g., via radar or ultrasound), and select an optimal device to respond to the user (e.g., based on the type of response, positioning of the devices and user, obstructions, and individual device capabilities).

In one aspect, some implementations include a method performed at an audio device having memory, one or more processors, a speaker, and a microphone. The method includes, while audibly communicating with a user via the speaker and microphone: (1) sending one or more ultrasound pulses via the speaker; (2) receiving, via the microphone, one or more signals corresponding to the one or more ultrasound pulses; and (3) determining positioning of the user based on the one or more received signals.

In some implementations, the method further includes adjusting one or more parameters of the speaker and/or microphone based on the determined positioning of the user.

In some implementations: (1) the method further includes: (a) scanning ultrasound environs of the audio device; and (b) determining, based on the scanning, one or more ultrasound parameters for the one or more ultrasound pulses; and (2) the one or more ultrasound pulses are sent with the one or more ultrasound parameters.

In another aspect, some implementations include a method performed at an audio device having memory, one or more processors, a speaker, and a microphone. The method includes: (1) sending a first set of ultrasound chirps at a first rate via the speaker; (2) receiving, via the microphone, a first set of signals corresponding to the first set of ultrasound chirps; (3) determining based on the first set of signals that a person is in proximity to the audio device; and (4) in accordance with the determination that the person is in proximity to the audio device, sending a second set of ultrasound chirps at a second rate, faster than the first rate

In another aspect, some implementations include smart or audio device having one or more processors; a microphone; a speaker; and memory storing one or more instructions that, when executed by the one or more processors perform any of the methods described herein.

In another aspect, some implementations include a non-transitory computer-readable storage medium storing one or more programs, the one or more programs comprising instructions which, when executed by a (smart or audio) device, cause the device to perform any of the methods described herein.

Thus, devices are provided with more efficient and effective methods for detecting and interacting with users, thereby increasing the accuracy, effectiveness, efficiency, and user satisfaction with such devices, while reducing power consumption and extending battery life. Such devices and methods may complement or replace conventional systems and methods for detecting and interacting with users.

### BRIEF DESCRIPTION OF THE DRAWINGS

For a better understanding of the various described implementations, reference should be made to the Description of Implementations below, in conjunction with the following drawings in which like reference numerals refer to corresponding parts throughout the figures. In the following description figures and the description related to the positioning of the user are considered as being examples not forming part of the invention.
Figure 1 is an example smart home environment in accordance with some implementations.
Figure 2A is a block diagram illustrating a representative network architecture that includes a smart home network in accordance with some implementations.
Figure 2B is a representative operating environment in which a server system interacts with client devices and smart devices in accordance with some implementations.
Figure 2C illustrates representative system architecture for event analysis and categorization in accordance with some implementations.
Figure 3 is a block diagram illustrating a representative server system in accordance with some implementations.
Figure 4A is a block diagram illustrating a representative smart device in accordance with some implementations.
Figure 4B is a block diagram illustrating a representative audio device in accordance with some implementations.
Figure 5 is a block diagram illustrating a representative client device in accordance with some implementations.
Figures 6A-6B illustrate a representative operating sequence for a representative audio device in accordance with some implementations.
Figures 7A-7D illustrate another representative operating sequence for a representative audio device in accordance with some implementations.
Figures 8A-8C illustrate a representative operating sequence for a plurality of smart devices in accordance with some implementations.
Figures 9A-9C illustrate another representative operating sequence for a plurality of smart devices in accordance with some implementations.
Figures 10A-10C are flow diagrams illustrating a representative method of operation for a representative audio device in accordance with some implementations.
Figures 11A-11C illustrate another representative operating sequence for a representative audio device in accordance with some implementations.
Figure 12 illustrates a representative operating sequence for a representative audio device in accordance with some implementations.
Figures 13A-13C are flow diagrams illustrating a representative method of operation for a representative audio device in accordance with some implementations.

### DETAILED DESCRIPTION

A smart home environment may include features that are confounding to various sensors, such as walls and visual obstacles, low light conditions, and atmospheric changes. In addition, multiple smart devices operating in proximity with one another within the smart home environment cause additional interference, e.g., radio interference, infrared interference, and the like. These confounding features interfere with interactions between the smart devices and the user, thereby decreasing accuracy, effectiveness, efficiency, and user satisfaction with such devices.

In accordance with some implementations, a smart device utilizes one or more sensors that can overcome the confounding features, such as an ultrasound module that can detect a user in low light conditions, or a radar module that can detect a user through visual obstacles and in low light. In some implementations, the smart device utilizes a plurality of sensors to detect and interact with a user. For example, the smart device uses a PIR sensor to determine if a user is in proximity to the device, then uses ultrasound to determine the user's positioning and/or interpret the user's gestures, posture, breathing cues, and the like. In this example, the smart device may use an image sensor to identify the user, a microphone to capture audible user requests, radar to track a user as the user passes behind an object, and Wi-Fi signal analysis to determine positioning of other smart devices (e.g., to handoff the user interaction when appropriate, or to modulate signal outputs to reduce interference with the other devices). In this way, the smart device is enabled to overcome the confounding features of the smart home environment and ensure a better user interaction.

Additionally, the smart device can utilize multiple sensors (or multiple settings of a particular sensor) to conserve energy and increase battery life. For example, a device may operate in a low energy "sleep" mode in which higher-energy sensors such as image sensors and radar modules are disabled to conserve energy. In this example, the device may use a PIR or ALS sensor to "wake up" and enable the higher-energy sensors. In another example, a device operates an ultrasound module in a lower power mode, in which pulses are emitted on a low duty cycle (e.g., 1 pulse every 500 milliseconds, 1 second, or 3 seconds). In this example, once motion is detected in the lower power mode, the device transitions to a higher power mode, in which pulses are emitted more frequently (e.g., 1 pulse every 10 milliseconds, 50 milliseconds, or 100 milliseconds). In addition, once the device determines a user's relative positioning, the device may modulate the output to conserve energy and reduce potential interference with other nearby devices (e.g., modulate duty cycle, frequency, amplitude, and/or phase of the signals). For example, in some implementations the device uses a +3dB ultrasonic signal to detect if a user is in proximity to the device. In this example, once the user is detected within the proximity (e.g., within 10 feet, 5 feet, or 3 feet, 1 foot corresponds to 0,3048 m; in the following description the unit foot will be used), the device switches to a +1dB signal (e.g., optionally with a higher duty cycle). In this way, once a user is identified as being in proximity to the device, ultrasonic pulse energy can be reduced as the ultrasonic pulses do not travel need to travel as far as when the device is in detection mode, which allows the device to conserve energy.

Table 1 below illustrates the types of sensors that may be included on a smart device as well as example use cases for each type of sensor.

**Table 1 - Example smart device sensors and use cases**

| | **Ultrasound Imaging** | **Radar** | **Wi-Fi Analysis (e.g., CSI, BW, RSSI)** | **Visual Imaging** | **Passive Infrared (PIR)** | **Ambient Light Sensor (ALS)** | **Audible Microphone** |
|---|---|---|---|---|---|---|---|
| **Detect Motion** | X | X | X | X | X | | |
| **Differentiate multiple moving entities** | X | X | X | X | | | |
| **Track stationary person(s)** | X | X | X | X | | | |
| **Traverse visual obstructions** | | X | X | | | | |
| **Wide field of view** | X | X | X | X | | | |
| **Track motion toward the device** | X | X | X | X | | | |
| **Determine proximity** | X | X | X | | | | |
| **Identify known person(s)** | X | X | X | X | | | X |
| **Light level independent** | X | X | X | | X | | |
| **Synchronize with remote devices** | X | | X | | | | |
| **Identify breathing cues** | X | X | X | | | | |
| **Identify air gestures** | X | X | X | X | | | |
| **Operable at low power** | X | X | X | | X | X | |
| **Detectable by humans/pets** | X | | | | | | |
| **Detect minimal motion** | X | X | X | | | | |
| **Identify heart rates** | X | X | | | | | |

As shown in Table 1, each sensor type has particular uses and advantages. However, each sensor is also potentially susceptible to certain confounding factors. For example: (1) acoustic interference may confound ultrasound imaging components and microphones; (2) changes in atmosphere pressure and temperature may confound ultrasound imaging components and PIR sensors; (3) multiple entities that are equidistance from the sensor may confound ultrasound or radar components using a single receiver; (4) radio interference may confound a radar components and a wireless communication (Wi-Fi) signal analysis components; (5) infrared interference may confound a PIR sensor; (6) visual obstructions may confound visual imaging, PIR, ALS, and ultrasound components; and (7) low light conditions may confound visual imaging components. Also, since radar can penetrate walls and objects, it may be difficult for the radar component to determine what entities are in line-of-sight of the device.

In various implementations, the devices described herein (e.g., the electronic, audio, and/or smart devices) include all or a subset of the sensors shown in Table 1 above. In some implementations, the devices described herein include a set of sensors selected to complement one another and overcome various confounding factors as discussed above. In some implementations, the devices described herein include a first set of sensors operable with low power and a second set of sensors that have higher power consumption. In some implementations, the second set of sensors are disabled, or in a sleep mode, until activated based on data from the first set of sensors, thereby saving power consumption at the device.

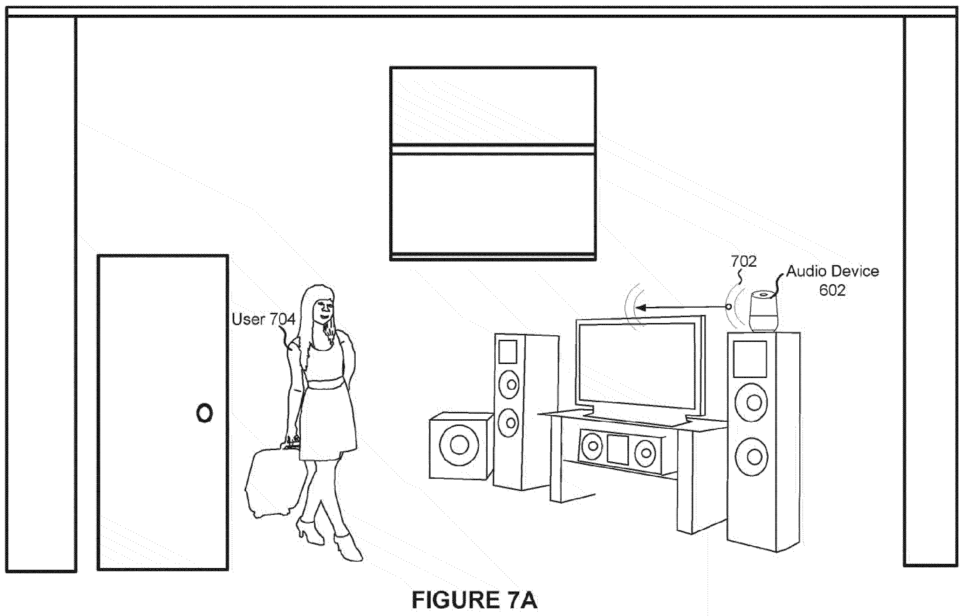

In some implementations, the devices described herein utilize one or more device interface elements (e.g., microphones and speakers) for multiple purposes. For example, an audio assistant and a display assistant optionally utilize the microphones and speakers for assistant functionalities as well as for ultrasonic scanning (e.g., as illustrated in Figures 7A-7D below). Utilizing the same elements for multiple functions reduces product costs and allows for smaller form factors of the device. Moreover, utilizing standard microphones and speakers allows for after-market adaptation of the device(s) to perform ultrasonic scanning without requiring new parts (e.g., can be enabled with only a software update). In this way, the devices described herein (e.g., hazard detectors, cameras, routers, etc.) are adapted to provide additional functionality to consumers. For example, an existing router installed in a consumer's home can be updated (e.g., via a software patch) to perform Wi-Fi analysis (see Table 1 above) while continuing to perform the router functions that prompted the user to purchase the router originally. Additionally, in a smart home environment the additional functionality for individual devices is optionally shared with other smart devices in the home and/or the smart home server to provide a more complete smart home experience to user(s).

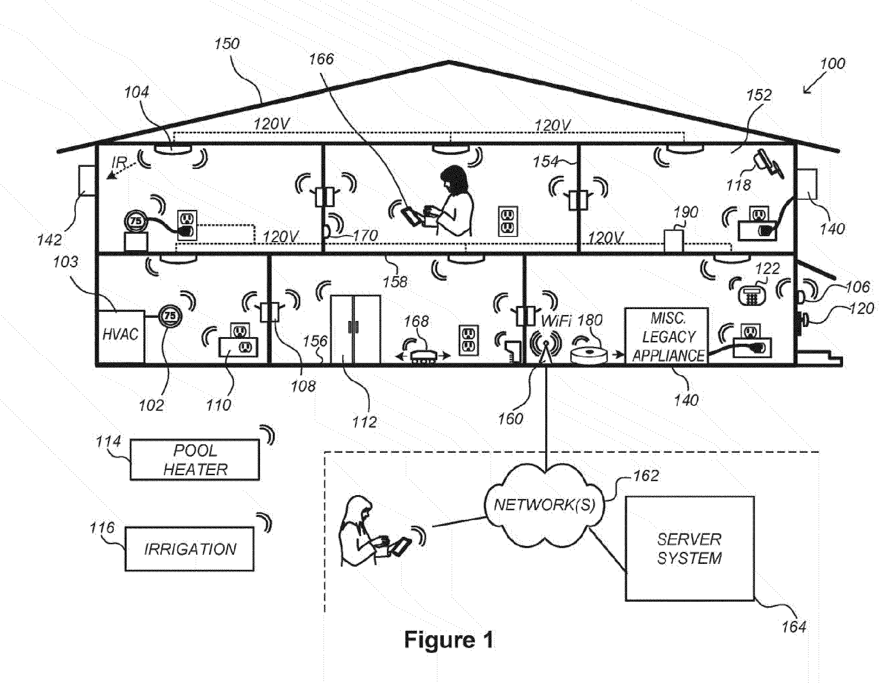

Turning now to the figures, Figure 1 is an example smart home environment 100 in accordance with some implementations. The smart home environment 100 includes a structure 150 (e.g., a house, office building, garage, or mobile home) with various integrated devices. It will be appreciated that devices may also be integrated into a smart home environment 100 that does not include an entire structure 150, such as an apartment, condominium, or office space. Further, the smart home environment 100 may control and/or be coupled to devices outside of the actual structure 150. Indeed, several devices in the smart home environment 100 need not be physically within the structure 150. For example, a device controlling a pool heater 114 or irrigation system 116 may be located outside of the structure 150.

It is to be appreciated that "smart home environments" may refer to smart environments for homes such as a single-family house, but the scope of the present teachings is not so limited. The present teachings are also applicable, without limitation, to duplexes, townhomes, multi-unit apartment buildings, hotels, retail stores, office buildings, industrial buildings, and more generally any living space or work space.

It is also to be appreciated that while the terms user, customer, installer, homeowner, occupant, guest, tenant, landlord, repair person, and the like may be used to refer to the person or persons acting in the context of some particularly situations described herein, these references do not limit the scope of the present teachings with respect to the person or persons who are performing such actions. Thus, for example, the terms user, customer, purchaser, installer, subscriber, and homeowner may often refer to the same person in the case of a single-family residential dwelling, because the head of the household is often the person who makes the purchasing decision, buys the unit, and installs and configures the unit, and is also one of the users of the unit. However, in other scenarios, such as a landlord-tenant environment, the customer may be the landlord with respect to purchasing the unit, the installer may be a local apartment supervisor, a first user may be the tenant, and a second user may again be the landlord with respect to remote control functionality. Importantly, while the identity of the person performing the action may be germane to a particular advantage provided by one or more of the implementations, such identity should not be construed in the descriptions that follow as necessarily limiting the scope of the present teachings to those particular individuals having those particular identities.

The depicted structure 150 includes a plurality of rooms 152, separated at least partly from each other via walls 154. The walls 154 may include interior walls or exterior walls. Each room may further include a floor 156 and a ceiling 158. Devices may be mounted on, integrated with and/or supported by a wall 154, floor 156 or ceiling 158.

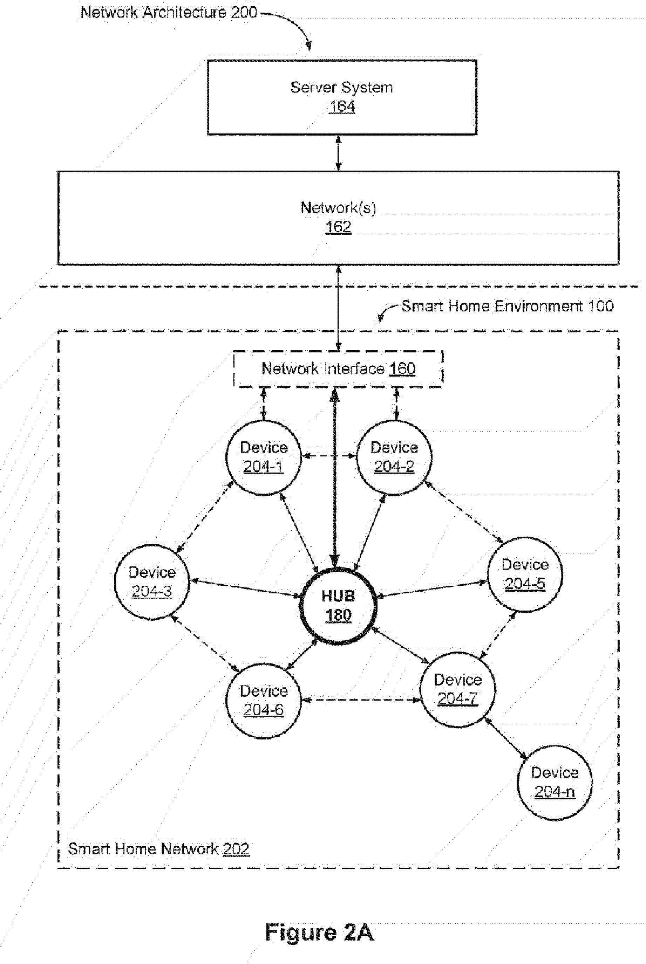

In some implementations, the integrated devices of the smart home environment 100 include intelligent, multi-sensing, network-connected devices that integrate seamlessly with each other in a smart home network (e.g., 202 Figure 2A) and/or with a central server or a cloud-computing system to provide a variety of useful smart home functions. The smart home environment 100 may include one or more intelligent, multi-sensing, network-connected thermostats 102 (hereinafter referred to as "smart thermostats 102"), one or more intelligent, network-connected, multi-sensing hazard detection units 104 (hereinafter referred to as "smart hazard detectors 104"), one or more intelligent, multi-sensing, network-connected entry way interface devices 106 and 120 (hereinafter referred to as "smart doorbells 106" and "smart door locks 120"), and one or more intelligent, multi-sensing, network-connected alarm systems 122 (hereinafter referred to as "smart alarm systems 122").

In some implementations, the one or more smart thermostats 102 detect ambient climate characteristics (e.g., temperature and/or humidity) and control a HVAC system 103 accordingly. For example, a respective smart thermostat 102 includes an ambient temperature sensor.

The one or more smart hazard detectors 104 may include thermal radiation sensors directed at respective heat sources (e.g., a stove, oven, other appliances, a fireplace, etc.). For example, a smart hazard detector 104 in a kitchen 153 includes a thermal radiation sensor directed at a stove/oven 112. A thermal radiation sensor may determine the temperature of the respective heat source (or a portion thereof) at which it is directed and may provide corresponding blackbody radiation data as output.

The smart doorbell 106 and/or the smart door lock 120 detects a person's approach to or departure from a location (e.g., an outer door), control doorbell/door locking functionality (e.g., receive user inputs from a portable electronic device 166 to actuate bolt of the smart door lock 120), announce a person's approach or departure via audio or visual means, and/or control settings on a security system (e.g., to activate or deactivate the security system when occupants go and come). In some implementations, the smart doorbell 106 and/or the smart lock 120 are battery-powered (e.g., are not line-powered). In some implementations, the smart doorbell 106 includes some or all of the components and features of the camera 118. In some implementations, the smart doorbell 106 includes a camera 118. In some implementations, the smart doorbell 106 includes a camera 118 that is embedded in the doorbell 106. In some implementations, the smart doorbell 106 includes a camera that is mounted on or near the doorbell 106. In some implementations, the smart doorbell 106 includes a camera 118 that is not mounted in, on, or near the doorbell 106, but is instead mounted in proximity to the doorbell 106. In some implementations, the smart doorbell 106 includes two or more cameras 118 (e.g., one camera facing the entryway, and another camera facing approaching visitors). In some implementations, the smart doorbell 106 has a camera (also sometimes referred to herein as doorbell camera 106) which is separate from a video camera 118. For the purposes of this disclosure, video-related references to doorbell 106 refer to one or more cameras associated with doorbell 106.

The smart alarm system 122 may detect the presence of an individual within close proximity (e.g., using built-in IR sensors), sound an alarm (e.g., through a built-in speaker, or by sending commands to one or more external speakers), and send notifications to entities or users within/outside of the smart home network 100. In some implementations, the smart alarm system 122 also includes one or more input devices or sensors (e.g., keypad, biometric scanner, NFC transceiver, microphone) for verifying the identity of a user, and one or more output devices (e.g., display, speaker). In some implementations, the smart alarm system 122 may also be set to an "armed" mode, such that detection of a trigger condition or event causes the alarm to be sounded unless a disarming action is performed.

In some implementations, the smart home environment 100 includes one or more intelligent, multi-sensing, network-connected wall switches 108 (hereinafter referred to as "smart wall switches 108"), along with one or more intelligent, multi-sensing, network-connected wall plug interfaces 110 (hereinafter referred to as "smart wall plugs 110"). The smart wall switches 108 detect ambient lighting conditions, detect room-occupancy states, and/or control a power and/or dim state of one or more lights. In some instances, smart wall switches 108 also control a power state or speed of a fan, such as a ceiling fan. The smart wall plugs 110 may detect occupancy of a room or enclosure and control supply of power to one or more wall plugs (e.g., such that power is not supplied to the plug if nobody is at home).

In some implementations, the smart home environment 100 of Figure 1 includes a plurality of intelligent, multi-sensing, network-connected appliances 112 (hereinafter referred to as "smart appliances 112"), such as refrigerators, stoves, ovens, televisions, washers, dryers, lights, stereos, intercom systems, garage-door openers, floor fans, ceiling fans, wall air conditioners, pool heaters, irrigation systems, security systems, space heaters, window AC units, motorized duct vents, and so forth. In some implementations, when plugged in, an appliance may announce itself to the smart home network, such as by indicating what type of appliance it is, and it may automatically integrate with the controls of the smart home. Such communication by the appliance to the smart home may be facilitated by either a wired or wireless communication protocol. The smart home may also include a variety of non-communicating legacy appliances 140, such as old conventional washer/dryers, refrigerators, and the like, which may be controlled by smart wall plugs 110. The smart home environment 100 may further include a variety of partially communicating legacy appliances 142, such as infrared ("IR") controlled wall air conditioners or other IR-controlled devices, which may be controlled by IR signals provided by the smart hazard detectors 104 or the smart wall switches 108.

In some implementations, the smart home environment 100 includes one or more network-connected cameras 118 that are configured to provide video monitoring and security in the smart home environment 100. In some implementations, the cameras 118 are battery-powered (e.g., are not line-powered). In some implementations, as described in more detail below, the cameras 118 are configured to selectively couple to one or more networks and/or selectively capture, store, transmit video data (e.g., based on presence and characterization of motion within the field of view). In some implementations, in the low power mode, a camera 118 detects an approaching visitor using a low power sensor, such as a PIR sensor, which is always on or periodically on.

In some implementations, the cameras 118 are used to determine occupancy of the structure 150 and/or particular rooms 152 in the structure 150, and thus act as occupancy sensors. For example, video captured by the cameras 118 may be processed to identify the presence of an occupant in the structure 150 (e.g., in a particular room 152). Specific individuals may be identified based, for example, on their appearance (e.g., height, face) and/or movement (e.g., their walk/gait). Cameras 118 may additionally include one or more sensors (e.g., IR sensors, motion detectors), input devices (e.g., microphone for capturing audio), and output devices (e.g., speaker for outputting audio). In some implementations, the cameras 118 are each configured to operate in a day mode and in a low-light mode (e.g., a night mode). In some implementations, the cameras 118 each include one or more IR illuminators for providing illumination while the camera is operating in the low-light mode. In some implementations, the cameras 118 include one or more outdoor cameras. In some implementations, the outdoor cameras include additional features and/or components such as weatherproofing and/or solar ray compensation.

In some implementations, the smart home environment 100 includes one or more network-connected doorbells 106 that are configured to provide video monitoring and security in a vicinity of an entry way of the smart home environment 100. The doorbells 106 are optionally used to determine the approach and/or presence of a visitor. Specific individuals are optionally identified based, for example, on their appearance (e.g., height, face) and/or movement (e.g., their walk/gait). A doorbell 106 optionally includes one or more sensors (e.g., IR sensors, motion detectors), input devices (e.g., microphone for capturing audio), and output devices (e.g., speaker for outputting audio). In some implementations, a doorbell 106 is configured to operate in a high-light mode (e.g., a day mode) and in a low-light mode (e.g., a night mode). In some implementations, a doorbell 106 includes one or more IR illuminators for providing illumination while the camera is operating in the low-light mode. In some implementations, a doorbell 106 includes one or more lights (e.g., one or more LEDs) for illuminating the doorbell in low-light conditions and/or giving visual feedback to a visitor. In some implementations, a doorbell 106 includes additional features and/or components such as weatherproofing and/or solar ray compensation. In some implementations, doorbell 106 is battery powered and runs in a low power or a high power mode. In some implementations, in the low power mode, doorbell 106 detects an approaching visitor using a low power sensor such as a PIR sensor which is always on or periodically on. In some implementations, after the visitor approach is detected, doorbell 106 switches to the high power mode to carry out further processing functions (described below).

In some implementations, the smart home environment 100 additionally or alternatively includes one or more other occupancy sensors (e.g., the smart doorbell 106, smart door locks 120, touch screens, IR sensors, microphones, ambient light sensors, motion detectors, smart nightlights 170, etc.). In some implementations, the smart home environment 100 includes radio-frequency identification (RFID) readers (e.g., in each room 152 or a portion thereof) that determine occupancy based on RFID tags located on or embedded in occupants. For example, RFID readers may be integrated into the smart hazard detectors 104.

In some implementations, the smart home environment 100 includes one or more devices outside of the physical home but within a proximate geographical range of the home. For example, the smart home environment 100 may include a pool heater monitor 114 that communicates a current pool temperature to other devices within the smart home environment 100 and/or receives commands for controlling the pool temperature. Similarly, the smart home environment 100 may include an irrigation monitor 116 that communicates information regarding irrigation systems within the smart home environment 100 and/or receives control information for controlling such irrigation systems.

By virtue of network connectivity, one or more of the smart home devices of Figure 1 may further allow a user to interact with the device even if the user is not proximate to the device. For example, a user may communicate with a device using a computer (e.g., a desktop computer, laptop computer, or tablet) or other portable electronic device 166 (e.g., a mobile phone, such as a smart phone). A webpage or application may be configured to receive communications from the user and control the device based on the communications and/or to present information about the device's operation to the user. For example, the user may view a current set point temperature for a device (e.g., a stove) and adjust it using a computer. The user may be in the structure during this remote communication or outside the structure.

As discussed above, users may control smart devices in the smart home environment 100 using a network-connected computer or portable electronic device 166. In some examples, some or all of the occupants (e.g., individuals who live in the home) may register their device 166 with the smart home environment 100. Such registration may be made at a central server to authenticate the occupant and/or the device as being associated with the home and to give permission to the occupant to use the device to control the smart devices in the home. An occupant may use their registered device 166 to remotely control the smart devices of the home, such as when the occupant is at work or on vacation. The occupant may also use their registered device to control the smart devices when the occupant is actually located inside the home, such as when the occupant is sitting on a couch inside the home. It should be appreciated that instead of or in addition to registering devices 166, the smart home environment 100 may make inferences about which individuals live in the home and are therefore occupants and which devices 166 are associated with those individuals. As such, the smart home environment may "learn" who is an occupant and permit the devices 166 associated with those individuals to control the smart devices of the home.

In some implementations, in addition to containing processing and sensing capabilities, the devices 102, 104, 106, 108, 110, 112, 114, 116, 118, 120, and/or 122 (collectively referred to as "the smart devices") are capable of data communications and information sharing with other smart devices, a central server or cloud-computing system, and/or other devices that are network-connected. Data communications may be carried out using any of a variety of custom or standard wireless protocols (e.g., IEEE 802.15.4, Wi-Fi, ZigBee, 6LoWPAN, Thread, Z-Wave, Bluetooth Smart, ISA100.5A, WirelessHART, MiWi, etc.) and/or any of a variety of custom or standard wired protocols (e.g., Ethernet, HomePlug, etc.), or any other suitable communication protocol, including communication protocols not yet developed as of the filing date of this document.

In some implementations, the smart devices serve as wireless or wired repeaters. In some implementations, a first one of the smart devices communicates with a second one of the smart devices via a wireless router. The smart devices may further communicate with each other via a connection (e.g., network interface 160) to a network, such as the Internet 162. Through the Internet 162, the smart devices may communicate with a server system 164 (also called a central server system and/or a cloud-computing system herein). The server system 164 may be associated with a manufacturer, support entity, or service provider associated with the smart device(s). In some implementations, a user is able to contact customer support using a smart device itself rather than needing to use other communication means, such as a telephone or Internet-connected computer. In some implementations, software updates are automatically sent from the server system 164 to smart devices (e.g., when available, when purchased, or at routine intervals).

In some implementations, the network interface 160 includes a conventional network device (e.g., a router), and the smart home environment 100 of Figure 1 includes a hub device 180 that is communicatively coupled to the network(s) 162 directly or via the network interface 160. The hub device 180 is further communicatively coupled to one or more of the above intelligent, multi-sensing, network-connected devices (e.g., smart devices of the smart home environment 100). Each of these smart devices optionally communicates with the hub device 180 using one or more radio communication networks available at least in the smart home environment 100 (e.g., ZigBee, Z-Wave, Insteon, Bluetooth, Wi-Fi and other radio communication networks). In some implementations, the hub device 180 and devices coupled with/to the hub device can be controlled and/or interacted with via an application running on a smart phone, household controller, laptop, tablet computer, game console or similar electronic device. In some implementations, a user of such controller application can view status of the hub device or coupled smart devices, configure the hub device to interoperate with smart devices newly introduced to the home network, commission new smart devices, and adjust or view settings of connected smart devices, etc. In some implementations the hub device extends capabilities of low capability smart device to match capabilities of the highly capable smart devices of the same type, integrates functionality of multiple different device types - even across different communication protocols, and is configured to streamline adding of new devices and commissioning of the hub device. In some implementations, hub device 180 further comprises a local storage device for storing data related to, or output by, smart devices of smart home environment 100. In some implementations, the data includes one or more of: video data output by a camera device, metadata output by a smart device, settings information for a smart device, usage logs for a smart device, and the like.

In some implementations, smart home environment 100 includes a local storage device 190 for storing data related to, or output by, smart devices of smart home environment 100. In some implementations, the data includes one or more of: video data output by a camera device (e.g., a camera included with doorbell 106), metadata output by a smart device, settings information for a smart device, usage logs for a smart device, and the like. In some implementations, local storage device 190 is communicatively coupled to one or more smart devices via a smart home network (e.g., smart home network 202, Figure 2A). In some implementations, local storage device 190 is selectively coupled to one or more smart devices via a wired and/or wireless communication network. In some implementations, local storage device 190 is used to store video data when external network conditions are poor. For example, local storage device 190 is used when an encoding bitrate of the camera included with doorbell 106 exceeds the available bandwidth of the external network (e.g., network(s) 162). In some implementations, local storage device 190 temporarily stores video data from one or more doorbells (e.g., doorbell 106) prior to transferring the video data to a server system (e.g., server system 164).

Figure 2A is a block diagram illustrating a representative network architecture 200 that includes a smart home network 202 in accordance with some implementations. In some implementations, the smart devices 204 in the smart home environment 100 (e.g., devices 102, 104, 106, 108, 110, 112, 114, 116, 118, 120, and/or 122) combine with the hub device 180 to create a mesh network in smart home network 202. In some implementations, one or more smart devices 204 in the smart home network 202 operate as a smart home controller. Additionally and/or alternatively, the hub device 180 operates as the smart home controller. In some implementations, a smart home controller has more computing power than other smart devices. In some implementations, a smart home controller processes inputs (e.g., from smart devices 204, electronic device 166, and/or server system 164) and sends commands (e.g., to smart devices 204 in the smart home network 202) to control operation of the smart home environment 100. In some implementations, some of the smart devices 204 in the smart home network 202 (e.g., in the mesh network) are "spokesman" nodes (e.g., 204-1) and others are "low-powered" nodes (e.g., 204-9). Some of the smart devices in the smart home environment 100 are battery powered, while others have a regular and reliable power source, such as by connecting to wiring (e.g., to 120V line voltage wires) behind the walls 154 of the smart home environment. The smart devices that have a regular and reliable power source are referred to as "spokesman" nodes. These nodes are typically equipped with the capability of using a wireless protocol to facilitate bidirectional communication with a variety of other devices in the smart home environment 100, as well as with the server system 164. In some implementations, one or more "spokesman" nodes operate as a smart home controller. On the other hand, the devices that are battery powered are the "low-power" nodes. These nodes tend to be smaller than spokesman nodes and typically only communicate using wireless protocols that require very little power, such as Zigbee, ZWave, 6LoWPAN, Thread, Bluetooth, etc.

In some implementations, some low-power nodes are incapable of bidirectional communication. These low-power nodes send messages, but they are unable to "listen". Thus, other devices in the smart home environment 100, such as the spokesman nodes, cannot send information to these low-power nodes.

In some implementations, some low-power nodes are capable of only a limited bidirectional communication. For example, other devices are able to communicate with the low-power nodes only during a certain time period.

As described, in some implementations, the smart devices serve as low-power and spokesman nodes to create a mesh network in the smart home environment 100. In some implementations, individual low-power nodes in the smart home environment regularly send out messages regarding what they are sensing, and the other low-powered nodes in the smart home environment - in addition to sending out their own messages - forward the messages, thereby causing the messages to travel from node to node (i.e., device to device) throughout the smart home network 202. In some implementations, the spokesman nodes in the smart home network 202, which are able to communicate using a relatively high-power communication protocol, such as IEEE 802.11, are able to switch to a relatively low-power communication protocol, such as IEEE 802.15.4, to receive these messages, translate the messages to other communication protocols, and send the translated messages to other spokesman nodes and/or the server system 164 (using, e.g., the relatively high-power communication protocol). Thus, the low-powered nodes using low-power communication protocols are able to send and/or receive messages across the entire smart home network 202, as well as over the Internet 162 to the server system 164. In some implementations, the mesh network enables the server system 164 to regularly receive data from most or all of the smart devices in the home, make inferences based on the data, facilitate state synchronization across devices within and outside of the smart home network 202, and send commands to one or more of the smart devices to perform tasks in the smart home environment.

As described, the spokesman nodes and some of the low-powered nodes are capable of "listening." Accordingly, users, other devices, and/or the server system 164 may communicate control commands to the low-powered nodes. For example, a user may use the electronic device 166 (e.g., a smart phone) to send commands over the Internet to the server system 164, which then relays the commands to one or more spokesman nodes in the smart home network 202. The spokesman nodes may use a low-power protocol to communicate the commands to the low-power nodes throughout the smart home network 202, as well as to other spokesman nodes that did not receive the commands directly from the server system 164.

In some implementations, a smart nightlight 170 (Figure 1), which is an example of a smart device 204, is a low-power node. In addition to housing a light source, the smart nightlight 170 houses an occupancy sensor, such as an ultrasonic or passive IR sensor, and an ambient light sensor, such as a photo resistor or a single-pixel sensor that measures light in the room. In some implementations, the smart nightlight 170 is configured to activate the light source when its ambient light sensor detects that the room is dark and when its occupancy sensor detects that someone is in the room. In other implementations, the smart nightlight 170 is simply configured to activate the light source when its ambient light sensor detects that the room is dark. Further, in some implementations, the smart nightlight 170 includes a low-power wireless communication chip (e.g., a ZigBee chip) that regularly sends out messages regarding the occupancy of the room and the amount of light in the room, including instantaneous messages coincident with the occupancy sensor detecting the presence of a person in the room. As mentioned above, these messages may be sent wirelessly (e.g., using the mesh network) from node to node (i.e., smart device to smart device) within the smart home network 202 as well as over the Internet 162 to the server system 164.

Other examples of low-power nodes include battery-powered versions of the smart hazard detectors 104, cameras 118, doorbells 106, and the like. These battery-powered smart devices are often located in an area without access to constant and reliable power and optionally include any number and type of sensors, such as image sensor(s), occupancy/motion sensors, ambient light sensors, ambient temperature sensors, humidity sensors, smoke/fire/heat sensors (e.g., thermal radiation sensors), carbon monoxide/dioxide sensors, and the like. Furthermore, battery-powered smart devices may send messages that correspond to each of the respective sensors to the other devices and/or the server system 164, such as by using the mesh network as described above.

Examples of spokesman nodes include line-powered smart doorbells 106, smart thermostats 102, smart wall switches 108, and smart wall plugs 110. These devices are located near, and connected to, a reliable power source, and therefore may include more power-consuming components, such as one or more communication chips capable of bidirectional communication in a variety of protocols.

In some implementations, the smart home environment 100 includes service robots 168 (Figure 1) that are configured to carry out, in an autonomous manner, any of a variety of household tasks.

As explained above with reference to Figure 1, in some implementations, the smart home environment 100 of Figure 1 includes a hub device 180 that is communicatively coupled to the network(s) 162 directly or via the network interface 160. The hub device 180 is further communicatively coupled to one or more of the smart devices using a radio communication network that is available at least in the smart home environment 100. Communication protocols used by the radio communication network include, but are not limited to, ZigBee, Z-Wave, Insteon, EuOcean, Thread, OSIAN, Bluetooth Low Energy and the like. In some implementations, the hub device 180 not only converts the data received from each smart device to meet the data format requirements of the network interface 160 or the network(s) 162, but also converts information received from the network interface 160 or the network(s) 162 to meet the data format requirements of the respective communication protocol associated with a targeted smart device. In some implementations, in addition to data format conversion, the hub device 180 further processes the data received from the smart devices or information received from the network interface 160 or the network(s) 162 preliminary. For example, the hub device 180 can integrate inputs from multiple sensors/connected devices (including sensors/devices of the same and/or different types), perform higher level processing on those inputs - e.g., to assess the overall environment and coordinate operation among the different sensors/devices - and/or provide instructions to the different devices based on the collection of inputs and programmed processing. It is also noted that in some implementations, the network interface 160 and the hub device 180 are integrated to one network device. Functionality described herein is representative of particular implementations of smart devices, control application(s) running on representative electronic device(s) (such as a smart phone), hub device(s) 180, and server(s) coupled to hub device(s) via the Internet or other Wide Area Network. All or a portion of this functionality and associated operations can be performed by any elements of the described system - for example, all or a portion of the functionality described herein as being performed by an implementation of the hub device can be performed, in different system implementations, in whole or in part on the server, one or more connected smart devices and/or the control application, or different combinations thereof.

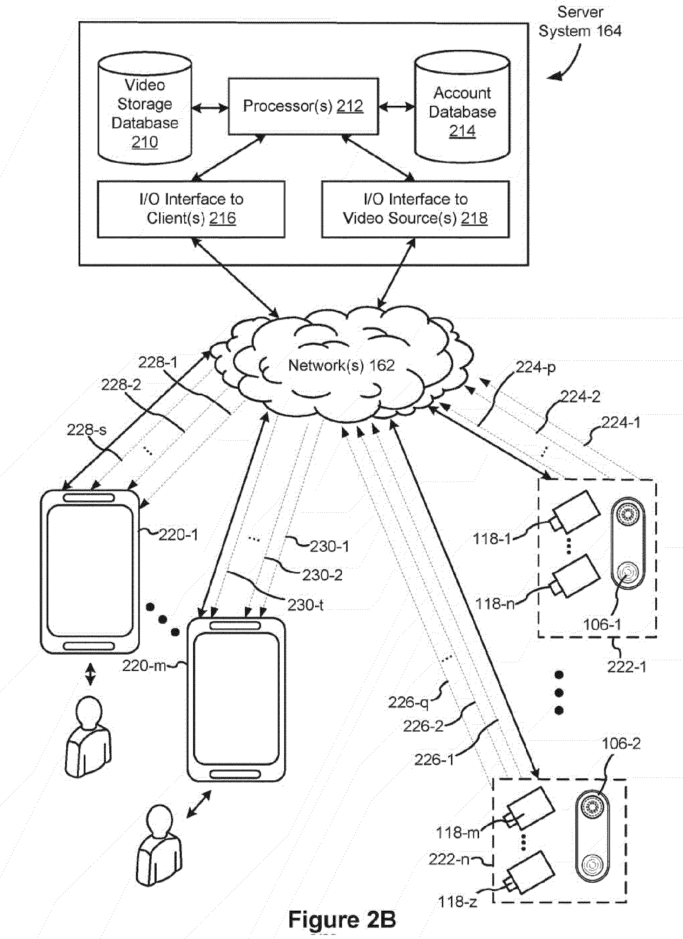

Figure 2B illustrates a representative operating environment in which a server system 164 provides data processing for monitoring and facilitating review of events (e.g., motion, audio, security, etc.) from data captured by the smart devices 204, such as video cameras 118 or doorbell cameras 106. As shown in Figure 2B, the server system 164 receives data from video sources 222 (including cameras 118 and/or doorbell cameras 106) located at various physical locations (e.g., inside or in proximity to homes, restaurants, stores, streets, parking lots, and/or the smart home environments 100 of Figure 1). In some implementations, the video source(s) 222 are linked to more than one reviewer account (e.g., multiple user accounts may be subscribed to a single smart home environment). In some implementations, the server system 164 provides video monitoring data for the video source 222 to client devices 220 associated with the reviewer accounts. For example, the portable electronic device 166 is an example of the client device 220. In some implementations, the server system 164 comprises a video processing server that provides video processing services to the video sources and client devices 220. In some implementations, the server system 164 receives non-video data from one or more smart devices 204 (e.g., audio data, metadata, numerical data, etc.). In some implementations, the non-video data is analyzed to provide context for motion events detected by the video cameras 118 and/or doorbell cameras 106. In some implementations, the non-video data indicates that an audio event (e.g., detected by an audio device), security event (e.g., detected by a perimeter monitoring device), hazard event (e.g., detected by a hazard detector), medical event (e.g., detected by a health-monitoring device), or the like has occurred within a smart home environment 100.

In some implementations, a multiple reviewer accounts are linked to a single smart home environment 100. For example, multiple occupants of a smart home environment 100 may have accounts liked to the smart home environment. In some implementations, each reviewer account is associated with a particular level of access. In some implementations, each reviewer account has personalized notification settings. In some implementations, a single reviewer account is linked to multiple smart home environments 100. For example, a person may own or occupy, or be assigned to review and/or govern, multiple smart home environments 100. In some implementations, the reviewer account has distinct levels of access and/or notification settings for each smart home environment.

In some implementations, each of the video sources 222 includes one or more video cameras 118 or doorbell cameras 106 that capture video and send the captured video to the server system 164 substantially in real-time. In some implementations, each of the video sources 222 includes one or more doorbell cameras 106 that capture video and send the captured video to the server system 164 in real-time (e.g., within 1 second, 10 seconds, 30 seconds, or 1 minute). In some implementations, each of the doorbells 106 include a video camera that captures video and sends the captured video to the server system 164 in real-time. In some implementations, a video source 222 includes a controller device (not shown) that serves as an intermediary between the one or more doorbells 106 and the server system 164. The controller device receives the video data from the one or more doorbells 106, optionally performs some preliminary processing on the video data, and sends the video data and/or the results of the preliminary processing to the server system 164 on behalf of the one or more doorbells 106 (e.g., in real-time). In some implementations, each camera has its own on-board processing capabilities to perform some preliminary processing on the captured video data before sending the video data (e.g., along with metadata obtained through the preliminary processing) to the controller device and/or the server system 164. In some implementations, one or more of the cameras is configured to optionally locally store the video data (e.g., for later transmission if requested by a user). In some implementations, a camera is configured to perform some processing of the captured video data, and, based on the processing, either send the video data in substantially real-time, store the video data locally, or disregard the video data.

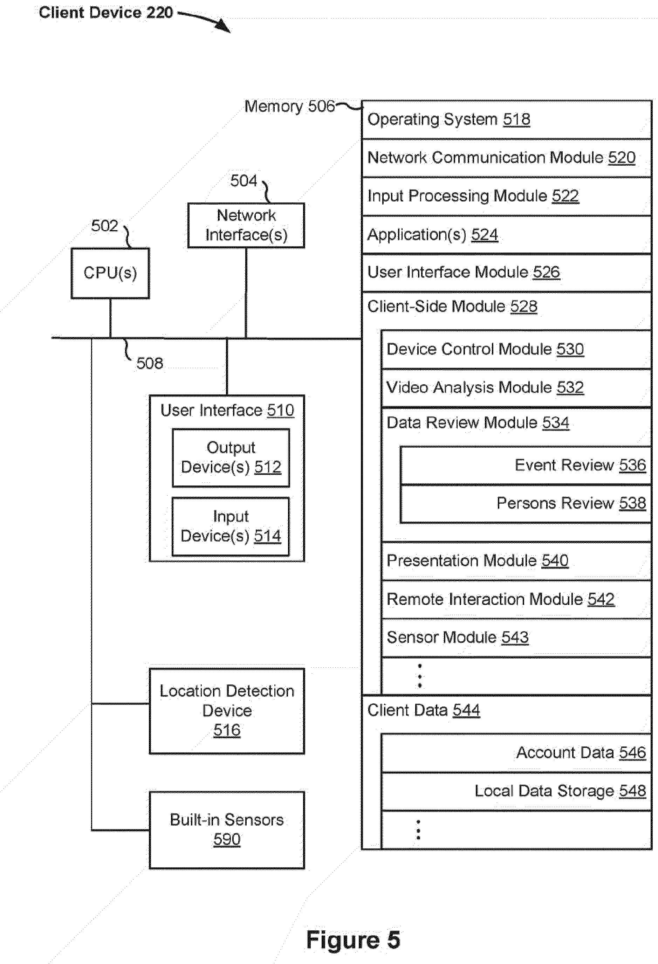

In accordance with some implementations, a client device 220 includes a client-side module or smart home application, such as client-side module 528 in Figure 5. In some implementations, the client-side module communicates with a server-side module executed on the server system 164 through the one or more networks 162. The client-side module provides client-side functionality for the event monitoring and review processing and communications with the server-side module. The server-side module provides server-side functionality for event monitoring and review processing for any number of client-side modules each residing on a respective client device 220. In some implementations, the server-side module also provides server-side functionality for video processing and camera control for any number of the video sources 222, including any number of control devices, cameras 118, and doorbells 106.

In some implementations, the server system 164 includes one or more processors 212, a video storage database 210, an account database 214, an I/O interface to one or more client devices 216, and an I/O interface to one or more video sources 218. The I/O interface to one or more clients 216 facilitates the client-facing input and output processing. The account database 214 stores a plurality of profiles for reviewer accounts registered with the video processing server, where a respective user profile includes account credentials for a respective reviewer account, and one or more video sources linked to the respective reviewer account. The I/O interface to one or more video sources 218 facilitates communications with one or more video sources 222 (e.g., groups of one or more doorbells 106, cameras 118, and associated controller devices). The video storage database 210 stores raw video data received from the video sources 222, as well as various types of metadata, such as motion events, event categories, event category models, event filters, and event masks, for use in data processing for event monitoring and review for each reviewer account.

Examples of a representative client device 220 include a handheld computer, a wearable computing device, a personal digital assistant (PDA), a tablet computer, a laptop computer, a desktop computer, a cellular telephone, a smart phone, an enhanced general packet radio service (EGPRS) mobile phone, a media player, a navigation device, a game console, a television, a remote control, a point-of-sale (POS) terminal, a vehicle-mounted computer, an ebook reader, or a combination of any two or more of these data processing devices or other data processing devices.

Examples of the one or more networks 162 include local area networks (LAN) and wide area networks (WAN) such as the Internet. The one or more networks 162 are implemented using any known network protocol, including various wired or wireless protocols, such as Ethernet, Universal Serial Bus (USB), FIREWIRE, Long Term Evolution (LTE), Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

In some implementations, the server system 164 is implemented on one or more standalone data processing apparatuses or a distributed network of computers. In some implementations, the server system 164 also employs various virtual devices and/or services of third party service providers (e.g., third-party cloud service providers) to provide the underlying computing resources and/or infrastructure resources of the server system 164. In some implementations, the server system 164 includes, but is not limited to, a server computer, a cloud server, a distributed cloud computing system, a handheld computer, a tablet computer, a laptop computer, a desktop computer, or a combination of any two or more of these data processing devices or other data processing devices.

In some implementations, a server-client environment includes both a client-side portion (e.g., the client-side module) and a server-side portion (e.g., the server-side module). The division of functionality between the client and server portions of operating environment can vary in different implementations. Similarly, the division of functionality between a video source 222 and the server system 164 can vary in different implementations. For example, in some implementations, the client-side module is a thin-client that provides only user-facing input and output processing functions, and delegates all other data processing functionality to a backend server (e.g., the server system 164). Similarly, in some implementations, a respective one of the video sources 222 is a simple video capturing device that continuously captures and streams video data to the server system 164 with limited or no local preliminary processing on the video data. Although many aspects of the present technology are described from the perspective of the server system 164, the corresponding actions performed by a client device 220 and/or the video sources 222 would be apparent to one of skill in the art. Similarly, some aspects of the present technology may be described from the perspective of a client device or a video source, and the corresponding actions performed by the video server would be apparent to one of skill in the art. Furthermore, some aspects may be performed by the server system 164, a client device 220, and a video source 222 cooperatively.

In some implementations, a video source 222 (e.g., a camera 118 or doorbell 106 having an image sensor) transmits one or more streams of video data to the server system 164. In some implementations, the one or more streams include multiple streams, of respective resolutions and/or frame rates, of the raw video captured by the image sensor. In some implementations, the multiple streams include a "primary" stream (e.g., 226-1) with a certain resolution and frame rate (e.g., corresponding to the raw video captured by the image sensor), and one or more additional streams (e.g., 226-2 through 226-q). An additional stream is optionally the same video stream as the "primary" stream but at a different resolution and/or frame rate, or a stream that captures a portion of the "primary" stream (e.g., cropped to include a portion of the field of view or pixels of the primary stream) at the same or different resolution and/or frame rate as the "primary" stream. In some implementations, the primary stream and/or the additional streams are dynamically encoded (e.g., based on network conditions, server operating conditions, camera operating conditions, characterization of data in the stream (e.g., whether motion is present), user preferences, and the like.

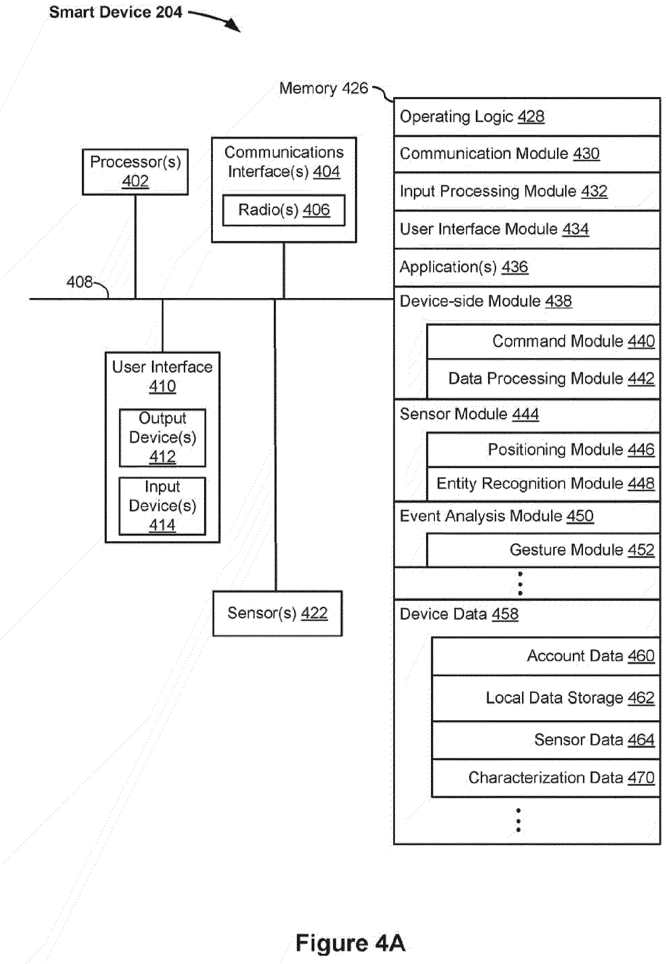

In some implementations, one or more of the streams 226 is sent from the video source 222 directly to a client device 220 (e.g., without being routed to, or processed by, the server system 164). In some implementations, one or more of the streams is stored at the doorbell 106 (e.g., in memory 426, Figure 4A) and/or a local storage device 190 (e.g., a dedicated recording device), such as a digital video recorder (DVR). For example, in accordance with some implementations, the doorbell 106 stores the most recent 24 hours of video footage recorded by the camera. As another example, in accordance with some implementations, the doorbell 106 stores up to 24 hours of video footage recorded by the camera (e.g., up to 24 hours of motion event data). In some implementations, portions of the one or more streams are stored at the doorbell 106 and/or the local storage device 109 (e.g., portions corresponding to particular events or times of interest).

In some implementations, the server system 164 transmits one or more streams of video data to a client device 220 to facilitate event monitoring by a user. In some implementations, the one or more streams may include multiple streams, of respective resolutions and/or frame rates, of the same video feed. In some implementations, the multiple streams include a "primary" stream with a certain resolution and frame rate, corresponding to the video feed, and one or more additional streams. An additional stream may be the same video stream as the "primary" stream but at a different resolution and/or frame rate, or a stream that shows a portion of the "primary" stream (e.g., cropped to include portion of the field of view or pixels of the primary stream) at the same or different resolution and/or frame rate as the "primary" stream.

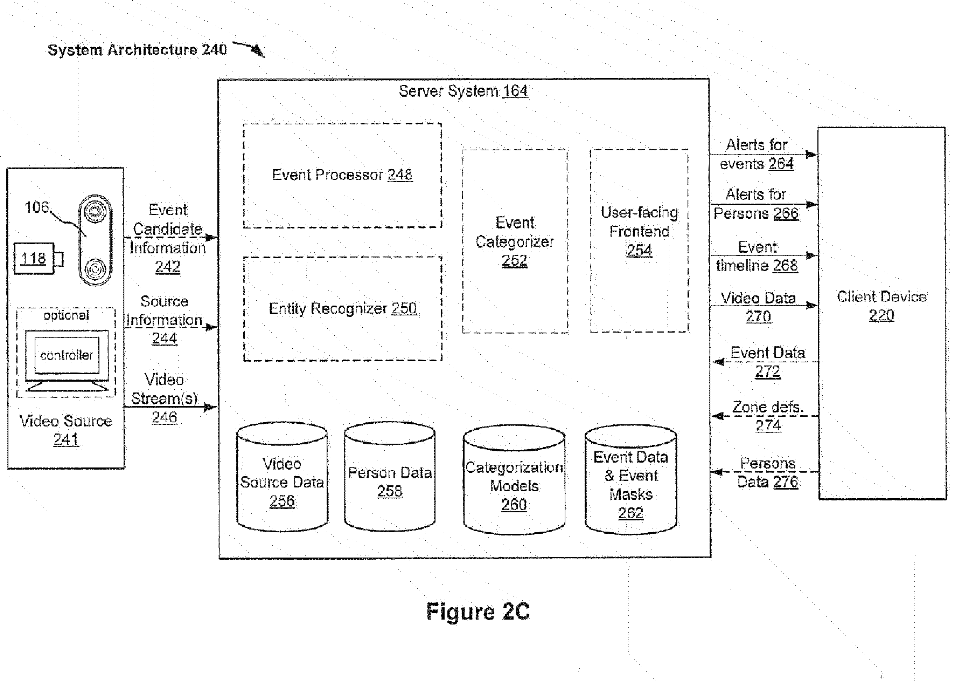

Figure 2C illustrates a representative system architecture 240 including video source(s) 241, server system 164, and client device(s) 220 in accordance with some implementations. In some implementations, the server system 164 includes functional modules for an event processor 248, an event categorizer 252, an entity recognizer 250, and a user-facing frontend 254. The event processor 248 obtains the event candidates (e.g., by processing the video stream(s) 246 or by receiving event start information from the video source 241, or by detecting a user press on a doorbell button of a doorbell camera). In some implementations, the event candidates comprise motion event candidates. In some implementations, the event candidates comprise audio event candidates. In some implementations, the event candidates include a user press on a doorbell button of a doorbell camera. In some implementations, the event candidates include audio, electromagnetic, olfactory, and/or visual aspects. In some implementations, the event candidates include motion events, approach detections, and announcement detections. The event categorizer 252 categorizes the event candidates into different event categories (e.g., based on data from the event processor and/or the entity recognizer). The user-facing frontend 254 generates event alerts and notifications, and facilitates review of the detected entities and events by a reviewer through a review interface on a client device 220. The user-facing frontend 254 also receives user edits on the event and entity categories, user preferences for alerts and event filters, zone definitions for zones of interest, and the like. The event categorizer optionally revises event categorization models and results based on the user edits received by the user-facing frontend. The entity recognizer optionally revises entity classifications and/or labels based on the user edits received by the user-facing frontend. In some implementations, the server system 164 also includes a video source data database 256, person data 258, event categorization models database 260, and event data and event masks database 262. In some implementations, the person data 258 includes a persons database. In some implementations, each of these databases is part of the server database 328 (e.g., part of data storage database 330).

The server system 164 receives one or more video stream(s) 246 from the video source 241 (e.g., a video source 222 from Figure 2B) and optionally receives event candidate information 242, such as preliminary characterization information for detected entities and events (e.g., entity and event metadata from processing performed at the doorbell 106), and source information 244 such as device settings for a doorbell 106. In some implementations, the event processor 248 communicates with the video source 241 and/or one or more other devices of the smart home environment, e.g., to request additional image data, audio data, and sensor data, such as high definition images or metadata for the video stream(s) 246. The server system sends alerts for events 264, alerts for detected persons 266, event timeline information 268, and/or video data 270 (e.g., still images or video clips corresponding to the detected persons and/or events) to the client device 220. In some implementations, the alerts 264 distinguish visitor approach events from other types of motion events. In some implementations, the alerts 264 distinguish motion events captured at a doorbell 106 from motion events captured by other smart devices (e.g., cameras 118). The server system 164 optionally receives user information from the client device 220, such as event information 272 (e.g., edits to event categories), and zone definitions 274, and persons data 276 (e.g., classification of detected persons).

A data processing pipeline processes video information (e.g., a live video feed) received from a video source 241 (e.g., including a doorbell 106 and an optional controller device) and/or audio information received from one or more smart devices in real-time (e.g., within 10 seconds, 30 seconds, or 2 minutes) to identify and categorize events occurring in the smart home environment, and sends real-time event alerts (e.g., within 10 seconds, 20 seconds, or 30 seconds) and/or a refreshed event timeline (e.g., within 30 seconds, 1 minute, or 3 minutes) to a client device 220 associated with a reviewer account for the smart home environment. The data processing pipeline also processes stored information (such as stored video feeds from a video source 241) to reevaluate and/or re-categorize events as necessary, such as when new information is obtained regarding the event and/or when new information is obtained regarding event categories (e.g., a new activity zone definition is obtained from the user).

After video and/or audio data is captured at a smart device, the data is processed to determine if any potential event candidates or persons are present. In some implementations, the data is initially processed at the smart device (e.g., video source 241, camera 118, or doorbell 106). Thus, in some implementations, the smart device sends event candidate information, such as event start information, to the server system 164. In some implementations, the data is processed at the server system 164 for event start detection. In some implementations, the video and/or audio data is stored on server system 164 (e.g., in video source database 256). In some implementations, the visual/audio data is stored on a server distinct from server system 164. In some implementations, after a motion start is detected, the relevant portion of the video stream is retrieved from storage (e.g., from video source database 256).

In some implementations, the event identification process includes segmenting the video stream into multiple segments then categorizing the event candidate within each segment. In some implementations, categorizing the event candidate includes an aggregation of background factors, entity detection and identification, motion vector generation for each motion entity, entity features, and scene features to generate motion features for the event candidate. In some implementations, the event identification process further includes categorizing each segment, generating or updating an event log based on categorization of a segment, generating an alert for the event based on categorization of a segment, categorizing the complete event, updating the event log based on the complete event, and generating an alert for the event based on the complete event. In some implementations, a categorization is based on a determination that the event occurred within a particular zone of interest. In some implementations, a categorization is based on a determination that the event candidate involves one or more zones of interest. In some implementations, a categorization is based on audio data and/or audio event characterization.

The event analysis and categorization process may be performed by the smart device (e.g., the video source 241) and the server system 164 cooperatively, and the division of the tasks may vary in different implementations, for different equipment capability configurations, power parameters, and/or for different network, device, and server load situations. After the server system 164 categorizes the event candidate, the result of the event detection and categorization may be sent to a reviewer associated with the smart home environment.

In some implementations, the server system 164 stores raw or compressed video data (e.g., in a video source database 256), event categorization models (e.g., in an event categorization model database 260), and event masks and other event metadata (e.g., in an event data and event mask database 262) for each of the video sources 241. In some implementations, the video data is stored at one or more display resolutions such as 480p, 780p, 1080i, 1080p, and the like.

In some implementations, the video source 241 (e.g., the doorbell 106) transmits a live video feed to the remote server system 164 via one or more networks (e.g., the network(s) 162). In some implementations, the transmission of the video data is continuous as the video data is captured by the doorbell 106. In some implementations, the transmission of video data is irrespective of the content of the video data, and the video data is uploaded from the video source 241 to the server system 164 for storage irrespective of whether any motion event has been captured in the video data. In some implementations, the video data is stored at a local storage device of the video source 241 by default, and only video portions corresponding to motion event candidates detected in the video stream are uploaded to the server system 164 (e.g., in real-time or as requested by a user).

In some implementations, the video source 241 dynamically determines at what display resolution the video stream is to be uploaded to the server system 164. In some implementations, the video source 241 dynamically determines which parts of the video stream are to be uploaded to the server system 164. For example, in some implementations, depending on the current server load and network conditions, the video source 241 optionally prioritizes the uploading of video portions corresponding to newly detected motion event candidates ahead of other portions of the video stream that do not contain any motion event candidates; or the video source 241 uploads the video portions corresponding to newly detected motion event candidates at higher display resolutions than the other portions of the video stream. This upload prioritization helps to ensure that important motion events are detected and alerted to the reviewer in real-time, even when the network conditions and server load are less than optimal. In some implementations, the video source 241 implements two parallel upload connections, one for uploading the continuous video stream captured by the doorbell 106, and the other for uploading video portions corresponding to detected motion event candidates. At any given time, the video source 241 determines whether the uploading of the continuous video stream needs to be suspended temporarily to ensure that sufficient bandwidth is given to the uploading of the video segments corresponding to newly detected motion event candidates.

In some implementations, the video stream uploaded for cloud storage is at a lower quality (e.g., lower resolution, lower frame rate, higher compression, etc.) than the video segments uploaded for motion event processing.

As shown in Figure 2C, the video source 241 optionally includes a video doorbell 106 and an optional controller device. In some implementations, the doorbell 106 includes sufficient on-board processing power to perform all necessary local video processing tasks (e.g., cuepoint detection for motion event candidates, video uploading prioritization, network connection management, etc.), and the doorbell 106 communicates with the server system 164 directly, without any controller device acting as an intermediary. In some implementations, the doorbell 106 captures the video data and sends the video data to the controller device for the necessary local video processing tasks. The controller device optionally performs the local processing tasks for multiple cameras. For example, there may be multiple cameras in one smart home environment (e.g., the smart home environment 100, Figure 1), and a single controller device receives the video data from each camera and processes the video data to detect motion event candidates in the video stream from each camera. The controller device is responsible for allocating sufficient outgoing network bandwidth to transmitting video segments containing motion event candidates from each camera to the server before using the remaining bandwidth to transmit the video stream from each camera to the server system 164. In some implementations, the continuous video stream is sent and stored at one server facility while the video segments containing motion event candidates are send to and processed at a different server facility.

In some implementations, the smart device sends additional source information 503 to the server system 164. This additional source information 244 may include information regarding a device state (e.g., IR mode, AE mode, DTPZ settings, etc.) and/or information regarding the environment in which the device is located (e.g., indoors, outdoors, night-time, day-time, etc.). In some implementations, the source information 244 is used by the server system 164 to perform event detection, entity recognition, and/or to categorize event candidates. In some implementations, the additional source information 244 includes one or more preliminary results from video processing performed by the video source 241 (e.g., a doorbell 106), such as categorizations, object/entity recognitions, motion masks, and the like.

In some implementations, the video portion after an event start incident is detected is divided into multiple segments. In some implementations, the segmentation continues until event end information (sometimes also called an "end-of-event signal") is obtained. In some implementations, the segmentation occurs within the server system 164 (e.g., by the event processor 248). In some implementations, the segmentation comprises generating overlapping segments. For example, a 10-second segment is generated every second, such that a new segment overlaps the prior segment by 9 seconds.

In some implementations, each of the multiple segments is of the same or similar duration (e.g., each segment has a 10-12 second duration). In some implementations, the first segment has a shorter duration than the subsequent segments. Keeping the first segment short allows for real time initial categorization and alerts based on processing the first segment. The initial categorization may then be revised based on processing of subsequent segments. In some implementations, a new segment is generated if the motion entity enters a new zone of interest.

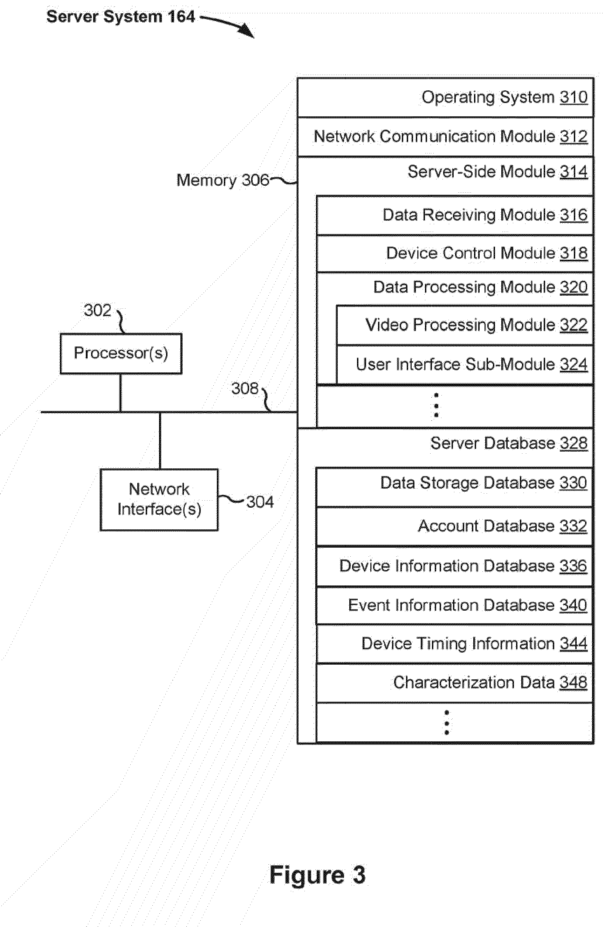

In some implementations, after the event processor module obtains the video portion corresponding to an event candidate, the event processor 248 obtains background factors and performs motion entity detection identification, motion vector generation for each motion entity, and feature identification. Once the event processor 248 completes these tasks, the event categorizer 252 aggregates all of the information and generates a categorization for the motion event candidate. In some implementations, the event processor 248 and the event categorizer 252 are components of the video processing module 322 (Figure 3). In some implementations, false positive suppression is optionally performed to reject some motion event candidates before the motion event candidates are submitted for event categorization. In some implementations, determining whether a motion event candidate is a false positive includes determining whether the motion event candidate occurred in a particular zone. In some implementations, determining whether a motion event candidate is a false positive includes analyzing an importance score for the motion event candidate. The importance score for a motion event candidate is optionally based on zones of interest involved with the motion event candidate, background features, motion vectors, scene features, entity features, motion features, motion tracks, and the like.

In some implementations, the video source 241 has sufficient processing capabilities to perform, and does perform, entity detection, person recognition, background estimation, motion entity identification, the motion vector generation, and/or the feature identification.

Figure 3 is a block diagram illustrating the server system 164 in accordance with some implementations. The server system 164 includes one or more processing units (CPUs) 302, one or more network interfaces 304 (e.g., including an I/O interface to one or more client devices and an I/O interface to one or more electronic devices), memory 306, and one or more communication buses 308 for interconnecting these components (sometimes called a chipset). The memory 306 includes high-speed random access memory, such as DRAM, SRAM, DDR SRAM, or other random access solid state memory devices; and, optionally, includes non-volatile memory, such as one or more magnetic disk storage devices, one or more optical disk storage devices, one or more flash memory devices, or one or more other non-volatile solid state storage devices. The memory 306, optionally, includes one or more storage devices remotely located from one or more processing units 302. The memory 306, or alternatively the non-volatile memory within memory 306, includes a non-transitory computer-readable storage medium. In some implementations, the memory 306, or the non-transitory computer-readable storage medium of the memory 306, stores the following programs, modules, and data structures, or a subset or superset thereof:
- an operating system 310 including procedures for handling various basic system services and for performing hardware dependent tasks;
- a network communication module 312 for connecting the server system 164 to other systems and devices (e.g., client devices, electronic devices, and systems connected to one or more networks 162) via one or more network interfaces 304 (wired or wireless);
- a server-side module 314, which provides server-side functionalities for device control, data processing, and data review, including, but not limited to:
   o a data receiving module 316 for receiving data from electronic devices (e.g., video data from a doorbell 106, Figure 1), and preparing the received data for further processing and storage in the data storage database 3160;
   o a device control module 318 for generating and sending server-initiated control commands to modify operation modes of electronic devices (e.g., devices of a smart home environment 100), and/or receiving (e.g., from client devices 220) and forwarding user-initiated control commands to modify operation modes of the electronic devices;
   o a data processing module 320 for processing the data provided by the electronic devices, and/or preparing and sending processed data to a device for review (e.g., client devices 220 for review by a user), including, but not limited to:
      ▪ a video processing sub-module 322 for processing (e.g., categorizing and/or recognizing) detected entities and/or event candidates within a received video stream (e.g., a video stream from doorbell 106);
      ▪ a user interface sub-module 324 for communicating with a user (e.g., sending alerts, timeline events, etc. and receiving user edits and zone definitions and the like); and
- a server database 328, including but not limited to:
   o a data storage database 330 for storing data associated with each electronic device (e.g., each doorbell) of each user account, as well as data processing models, processed data results, and other relevant metadata (e.g., names of data results, location of electronic device, creation time, duration, settings of the electronic device, etc.) associated with the data, where (optionally) all or a portion of the data and/or processing associated with the hub device 180 or smart devices are stored securely;
   o an account database 332 for storing account information for user accounts, including user account information such as user profiles 334, information and settings for linked hub devices and electronic devices (e.g., hub device identifications), hub device specific secrets, relevant user and hardware characteristics (e.g., service tier, device model, storage capacity, processing capabilities, etc.), user interface settings, data review preferences, etc., where the information for associated electronic devices includes, but is not limited to, one or more device identifiers (e.g., MAC address and UUID), device specific secrets, and displayed titles;
   o a device information database 336 for storing device information related to one or more devices such as device profiles 338, e.g., device identifiers and hub device specific secrets, independently of whether the corresponding hub devices have been associated with any user account;
   o an event information database 340 for storing event information such as event records 342 and context information, e.g., contextual data describing circumstances surrounding an approaching visitor; and
   o characterization data 348 for use with characterizing motion, persons, and events within the smart home environment, e.g., in conjunction with data processing module 320.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise rearranged in various implementations. In some implementations, the memory 306, optionally, stores a subset of the modules and data structures identified above. Furthermore, the memory 306, optionally, stores additional modules and data structures not described above (e.g., an account management module for linking client devices, smart devices, and smart home environments).

Figure 4A is a block diagram illustrating a representative smart device 204 in accordance with some implementations. In some implementations, the smart device 204 (e.g., any devices of a smart home environment 100, Figure 1) includes one or more processing units (e.g., CPUs, ASICs, FPGAs, microprocessors, and the like) 402, one or more communication interfaces 404 with radios 406, user interface 410, image sensor(s) 418, sensor(s) 422, memory 426, and one or more communication buses 408 for interconnecting these components (sometimes called a chipset). In some implementations, the user interface 410 includes one or more output devices 412 that enable presentation of media content, including one or more speakers and/or one or more visual displays. In some implementations, the user interface 410 includes one or more input devices 414, including user interface components that facilitate user input such as a keyboard, a mouse, a voice-command input unit or microphone, a touch screen display, a touch-sensitive input pad, a gesture capturing camera, or other input buttons or controls. In some implementations, an input device 414 for a doorbell 106 is a tactile or touch-sensitive doorbell button. Furthermore, some smart devices 204 use a microphone and voice recognition or a camera and gesture recognition to supplement or replace the keyboard.

The sensor(s) 422 include, for example, one or more thermal radiation sensors, ambient temperature sensors, humidity sensors, infrared (IR) sensors such as passive infrared (PIR) sensors, proximity sensors, range sensors, occupancy sensors (e.g., using RFID sensors), ambient light sensors (ALS), motion sensors 424, location sensors (e.g., GPS sensors), accelerometers, and/or gyroscopes.

The communication interfaces 404 include, for example, hardware capable of data communications using any of a variety of custom or standard wireless protocols (e.g., IEEE 802.15.4, Wi-Fi, ZigBee, 6LoWPAN, Thread, Z-Wave, Bluetooth Smart, ISA100.5A, WirelessHART, MiWi, etc.) and/or any of a variety of custom or standard wired protocols (e.g., Ethernet, HomePlug, etc.), or any other suitable communication protocol, including communication protocols not yet developed as of the filing date of this document. The radios 406 enable one or more radio communication networks in the smart home environments, and enable a smart device 204 to communicate with other devices. In some implementations, the radios 406 are capable of data communications using any of a variety of custom or standard wireless protocols (e.g., IEEE 802.15.4, Wi-Fi, ZigBee, 6LoWPAN, Thread, Z-Wave, Bluetooth Smart, ISA100.5A, WirelessHART, MiWi, etc.).

The memory 426 includes high-speed random access memory, such as DRAM, SRAM, DDR RAM, or other random access solid state memory devices; and, optionally, includes non-volatile memory, such as one or more magnetic disk storage devices, one or more optical disk storage devices, one or more flash memory devices, or one or more other non-volatile solid state storage devices. The memory 426, or alternatively the non-volatile memory within the memory 426, includes a non-transitory computer-readable storage medium. In some implementations, the memory 426, or the non-transitory computer-readable storage medium of the memory 426, stores the following programs, modules, and data structures, or a subset or superset thereof:
- operating logic 428 including procedures for handling various basic system services and for performing hardware dependent tasks;
- a communication module 430 for coupling to and communicating with other network devices (e.g., a network interface 160, such as a router that provides Internet connectivity, networked storage devices, network routing devices, a server system 164, other smart devices 204, client devices 220, etc.) connected to one or more networks 162 via one or more communication interfaces 404 (wired or wireless);
- an input processing module 432 for detecting one or more user inputs or interactions from the one or more input devices 414 and interpreting the detected inputs or interactions;
- a user interface module 434 for providing and presenting a user interface in which settings, captured data, and/or other data for one or more devices (e.g., the smart device 204, and/or other devices in a smart home environment 100) can be configured and/or viewed;
- one or more applications 436 for execution by the smart device (e.g., games, social network applications, smart home applications, and/or other web or non-web based applications) for controlling devices (e.g., executing commands, sending commands, and/or configuring settings of the smart device 204 and/or other client/electronic devices), and for reviewing data captured by devices (e.g., device status and settings, captured data, or other information regarding the smart device 204 and/or other client/electronic devices);
- a device-side module 438, which provides device-side functionalities for device control, data processing and data review, including but not limited to:
   o a command module 440 for receiving, forwarding, and/or executing instructions and control commands (e.g., from a client device 220, from a server system 164, from user inputs detected on the user interface 410, etc.) for operating the smart device 204; and
   o a data processing module 442 for processing data captured or received by one or more inputs (e.g., input devices 414, image sensor(s) 418, sensors 422, interfaces (e.g., communication interfaces 404, radios 440), and/or other components of the smart device 204, and for preparing and sending processed data to a remote device (e.g., client devices 220) for review by a user;
- a sensor module 444 for operating the sensor(s) 422 and associated circuitry, e.g., for enabling and disabling one or more high-power sensors based on data from one or more low-power sensors 422 (e.g., data from a PIR sensor or ALS), including but not limited to:
   o an positioning module 446 determining positioning of a user in proximity to the smart device (e.g., a user within sensor range); and
   o an entity recognition module 448 identifying persons and other entities (e.g., pets) within proximity to the smart device;
- an event analysis module 450 for analyzing captured sensor data, e.g., to recognize approaching visitors and context information, including, but not limited to:
   o a gesture module 452 for analyzing and/or interpreting user movements and gestures; and
- device data 458 storing data associated with devices (e.g., the smart device 204), including, but is not limited to:
   o account data 460 storing information related to user accounts linked to the smart device 204, e.g., including cached login credentials, smart device identifiers (e.g., MAC addresses and UUIDs), user interface settings, display preferences, authentication tokens and tags, password keys, and the like.;
   o local data storage 462 for selectively storing raw or processed data associated with the smart device 204, such as event data and/or video data captured by the image sensor(s) 418;
   o sensor data 464 storing sensor information, such as operating parameters, captured data, training sets, and the like; and
   o characterization data 470 for entities, persons, and/or events detected by, or associated with, the smart device 204.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise rearranged in various implementations. In some implementations, the memory 426, optionally, stores a subset of the modules and data structures identified above. Furthermore, the memory 426, optionally, stores additional modules and data structures not described above, such as a sensor management module for managing operation of the sensor(s) 422.

In some implementations, one or more operations of the smart device 204 are performed by the server system 164 and/or the client device 220. These operations include, but are not necessarily limited to, operations performed by or under control of computer program instructions such as the applications 436, device-side module 438, sensor module 444 and event analysis module 450. In some implementations, device data 458 associated with these operations that are performed by the server system 164 are stored, maintained and updated in whole or in part on or by the server system 164.

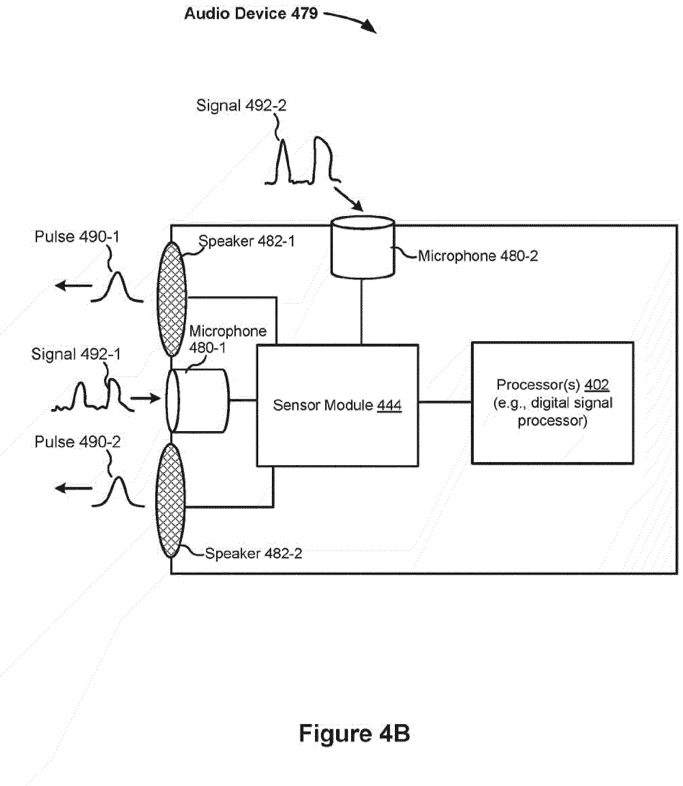

Figure 4B is a block diagram illustrating an audio device 479 in accordance with some implementations. In some implementations, the audio device 479 is a smart device 204. In some implementations, the audio device 479 is a client device 220. As shown in Figure 4B, the audio device 479 includes microphone(s) (e.g., microphones 480-1 and 480-2), speaker(s) (e.g., speakers 482-1 and 482-2), a sensor module (e.g., sensor module 444), and processor(s) (e.g., one or more processors 402). In some implementations, the processor(s) include a digital signal processor (DSP) and/or a central processing unit (CPU). In some implementations, the processor(s) are a component of a system-on-a-chip (SoC). In some implementations, the processor(s) are responsible for multiple operations of the audio device 479, including ultrasound operations.

In accordance with some implementations, the speaker(s) 482 are configured to emit ultrasonic pulses 490 (also sometimes called ultrasonic chirps) and the microphone(s) 480 are configured to receive corresponding ultrasonic signals 492. In some implementations, the pulses 490 are at a frequency above 20 kilohertz (kHz). In some implementations, the pulses 490 sweep a range of frequencies (e.g., a range between 20 kHz and 60 kHz). In some implementations, the signals 492 are analyzed (e.g., by the sensor module 444 and the processor(s) 402) to determine whether motion is present in proximity to the audio device (e.g., determine whether a user is in proximity to the audio device). In some implementations, analyzing the signals 492 includes comparing the profiles of the signals 492 the profiles of the pulses 490. In some implementations, analyzing the signals 492 includes comparing the profiles of the signals 492 to one another. In some implementations, analyzing the signals 492 includes analyzing timing between the sending of the pulses 490 and the receiving of the signals 492. In some implementations, the sensor module 444 includes a sound navigation and ranging (SONAR) module. Although pulses 490 are described above, in some implementations, continuous wave signals are emitted. In some implementations, frequency, amplitude, and/or phase of the signals (e.g., pulses or continuous wave) are modulated.

Figure 5 is a block diagram illustrating a representative client device 220 associated with a user account in accordance with some implementations. The client device 220, typically, includes one or more processing units (CPUs) 502, one or more network interfaces 504, memory 506, and one or more communication buses 508 for interconnecting these components (sometimes called a chipset). Optionally, the client device also includes a user interface 510 and one or more built-in sensors 590 (e.g., accelerometer and gyroscope). The user interface 510 includes one or more output devices 512 that enable presentation of media content, including one or more speakers and/or one or more visual displays. The user interface 510 also includes one or more input devices 514, including user interface components that facilitate user input such as a keyboard, a mouse, a voice-command input unit or microphone, a touch screen display, a touch-sensitive input pad, a gesture capturing camera, or other input buttons or controls. Furthermore, some the client devices use a microphone and voice recognition or a camera and gesture recognition to supplement or replace the keyboard. In some implementations, the client device includes one or more cameras, scanners, or photo sensor units for capturing images (not shown). Optionally, the client device includes a location detection device 516, such as a GPS (global positioning satellite) sensor or other geo-location receiver, for determining the location of the client device.

The memory 506 includes high-speed random access memory, such as DRAM, SRAM, DDR SRAM, or other random access solid state memory devices; and, optionally, includes non-volatile memory, such as one or more magnetic disk storage devices, one or more optical disk storage devices, one or more flash memory devices, or one or more other non-volatile solid state storage devices. The memory 506, optionally, includes one or more storage devices remotely located from one or more processing units 602. The memory 506, or alternatively the non-volatile memory within the memory 506, includes a non-transitory computer readable storage medium. In some implementations, the memory 506, or the non-transitory computer readable storage medium of the memory 506, stores the following programs, modules, and data structures, or a subset or superset thereof:
- an operating system 518 including procedures for handling various basic system services and for performing hardware dependent tasks;
- a network communication module 520 for connecting the client device 220 to other systems and devices (e.g., client devices, electronic devices, and systems connected to one or more networks 162) via one or more network interfaces 504 (wired or wireless);
- an input processing module 522 for detecting one or more user inputs or interactions from one of the one or more input devices 514 and interpreting the detected input or interaction;
- one or more applications 524 for execution by the client device (e.g., games, social network applications, smart home applications, and/or other web or non-web based applications) for controlling devices (e.g., sending commands, configuring settings, etc. to hub devices and/or other client or electronic devices) and for reviewing data captured by the devices (e.g., device status and settings, captured data, or other information regarding the hub device or other connected devices);
- a user interface module 526 for providing and displaying a user interface in which settings, captured data, and/or other data for one or more devices (e.g., smart devices 204 in smart home environment 100) can be configured and/or viewed;
- a client-side module 528, which provides client-side functionalities for device control, data processing and data review, including but not limited to:
   o a device control module 530 for generating control commands for modifying an operating mode of smart devices (and optionally other electronic devices) in accordance with user inputs;
   ∘ a video analysis module 532 for analyzing captured video data, e.g., to detect and/or recognize persons, objects, animals, and events, such as described previously with respect to video analysis module 442;
   ∘ a data review module 534 for providing user interfaces for reviewing data from the server system 164 or video sources 222, including but not limited to:
      ▪ an event review module 536 for reviewing events (e.g., motion and/or audio events), and optionally enabling user edits and/or updates to the events; and
      ▪ a persons review module 538 for reviewing data and/or images regarding detected persons and other entities, and optionally enabling user edits and/or updates to the persons data;
   ∘ a presentation module 540 for presenting user interfaces and response options for interacting with the smart devices 204 and/or the server system 164; and
   ∘ a remote interaction module 542 for interacting with a remote person (e.g., a visitor to the smart home environment 100), e.g., via a smart device 204 and/or the server system 164;
   ∘ a sensor module 543 for operating the sensor(s) 590 and associated circuitry, e.g., for utilizing a microphone and speaker to audibly communicate with a user and perform ultrasonic operations; and
- client data 544 storing data associated with the user account and electronic devices, including, but not limited to:
   ∘ account data 546 storing information related to both user accounts loaded on the client device and electronic devices (e.g., of the video sources 501) associated with the user accounts, wherein such information includes cached login credentials, hub device identifiers (e.g., MAC addresses and UUIDs), electronic device identifiers (e.g., MAC addresses and UUIDs), user interface settings, display preferences, authentication tokens and tags, password keys, etc.; and
   ∘ a local data storage database 548 for selectively storing raw or processed data associated with electronic devices (e.g., of the video sources 501, such as a doorbell 106), optionally including entity data described previously.

Each of the above identified elements may be stored in one or more of the previously mentioned memory devices, and corresponds to a set of instructions for performing a function described above. The above identified modules or programs (i.e., sets of instructions) need not be implemented as separate software programs, procedures, modules or data structures, and thus various subsets of these modules may be combined or otherwise rearranged in various implementations. In some implementations, the memory 506, optionally, stores a subset of the modules and data structures identified above. Furthermore, the memory 506, optionally, stores additional modules and data structures not described above, such as an ultrasound module. In some implementations, the programs, modules, and data structures, or a subset or superset thereof described with reference to Figure 5 can be implemented/hosted in whole or in part on or by the server system 164. Similarly, the programs, modules, and data structures, or a subset or superset thereof described with reference to Figure 3 can be implemented/hosted in whole or in part on or by the client device described with reference to Figure 5.

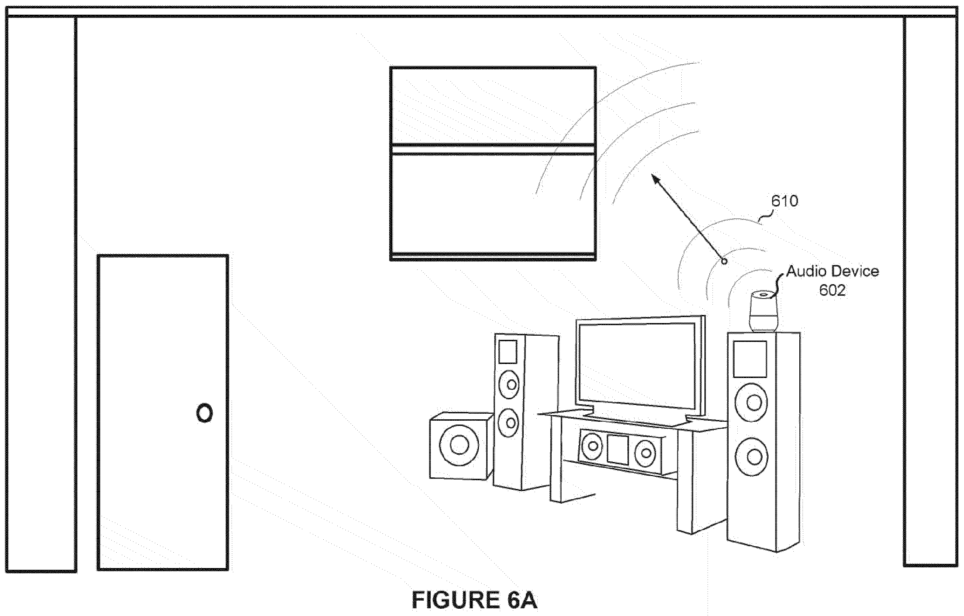

Figures 6A-6B illustrate a representative operating sequence for an audio device 602 in accordance with some implementations. Figure 6A shows the audio device 602 emitting one or more signals 610. In some implementations, the signals 610 are ultrasonic (e.g., pulses having a frequency in the range of 20 kHz to 90 kHz), while in other implementations, the signals 610 have other frequencies (e.g., radio frequencies). While Figure 6A shows the signals 610 emitted in a particular direction, in some implementations, the audio device 602 has a sufficient speaker configuration to emit, and does emit, signals in substantially all directions (e.g., so as to map out a room in which the audio device 602 is situated).

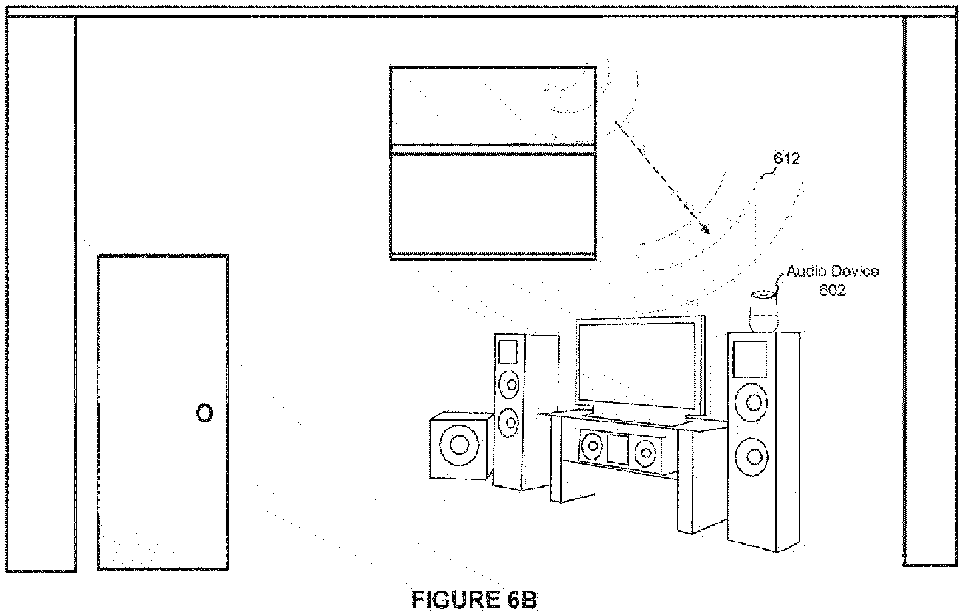

Figure 6B shows the audio device 602 receiving reflected signals 612 corresponding to the emitted signals 610. In some implementations, the reflected signals 612 are analyzed to determine whether a user is in proximity to the audio device 602. In some implementations, the reflected signals 612 are analyzed to determine distances to objects and boundaries around the audio device 602. In some implementations, the reflected signals 612 are analyzed to determine a signal-to-noise ratio (SNR) and/or an ultrasonic background of the audio device's 602 environs. In some implementations, the audio device 602 adjusts one or more parameters of subsequent ultrasonic signals (e.g., frequency, timing, amplitude, duty cycle, etc.) based on the SNR and/or ultrasonic background characteristics.

Thus, as illustrated in Figures 6A-6B, the audio device 602 scans its environs (e.g., using ultrasound and/or radar) to determine one or more of: whether a user is in proximity to the device, an SNR of the environs (e.g., at particular frequencies or frequency ranges), and a distance to boundaries and objects in the environs, in accordance with some implementations.

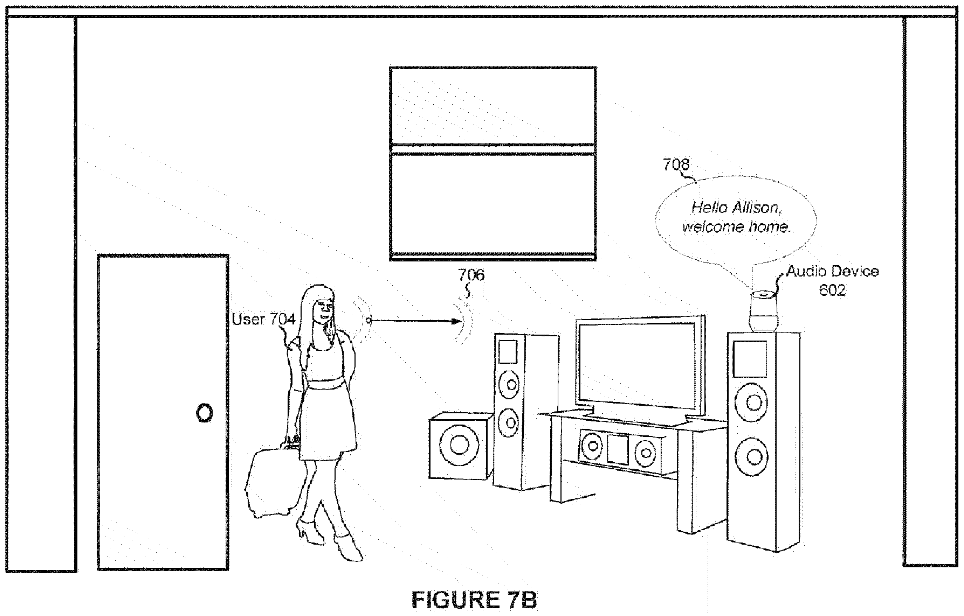

Figures 7A-7D illustrate another representative operating sequence for the audio device 602 in accordance with some implementations. Figure 7A shows the audio device 602 emitting signals 702 (e.g., at ultrasonic frequencies) to detect that a user 704 is in proximity to the device (e.g., within audio and/or visual range of the device). Figure 7B shows signals 706 (corresponding to the emitted signals 702) reflecting from the user 704 back to the audio device 602. Figure 7B further shows the audio device 602 greeting the user 704 in accordance with detection of the user. In some implementations, the audio device 602 determines a distance to the user 704 based on the reflected signals (e.g., timing between the reflected signals 706 and the emitted signals 702). In some implementations, the audio device 602 uses a same speaker (e.g., speaker 482-1, Figure 4B) to both emit the signals 702 (e.g., ultrasonic signals) and to greet the user 704 (e.g., audible frequency signals). In some implementations, the audio device 602 is able to detect minute movements (e.g., less than 1 cm in distance) of the user via an ultrasonic module (e.g., a SONAR module). Thus, in some implementations, the audio device 602 is able to detect that a user is in proximity based on respiratory movements by the user.

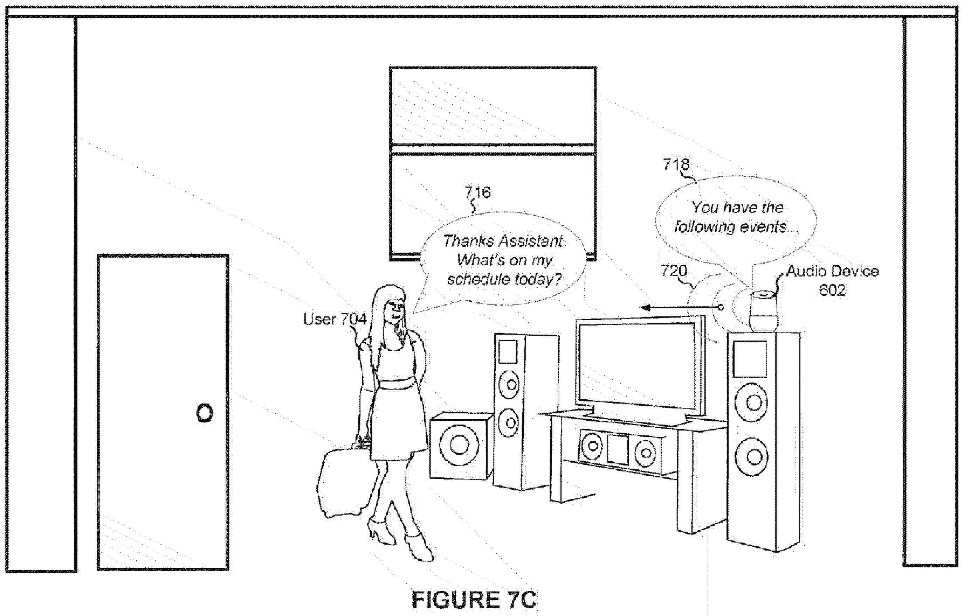

Figure 7C shows the user 704 making an audible request 716 directed to the audio device 602. Figure 7C further shows the audio device 602 audibly responding 718 to the user's request 716, while continuing to emit signals 720. In some implementations, the audio device 602 uses a same microphone (e.g., microphone 480-1, Figure 4B) to receive the reflected signals 706 and the user's audible request 716. In some implementations, the audio device's response 718 is modulated (e.g., a volume level is adjusted) based on the distance to the user 704. In some implementations, the audio device 602 concurrently emits, at different frequencies, the response 718 and the signals 720 (e.g., using a same speaker). In some implementations, based on the user's positioning, the audio device 602 determines an intensity of the user's request 716 (e.g., in decibels) and responds with a substantially same intensity (e.g., within 20%, 10%, or 5% of the user's intensity) in response 718.

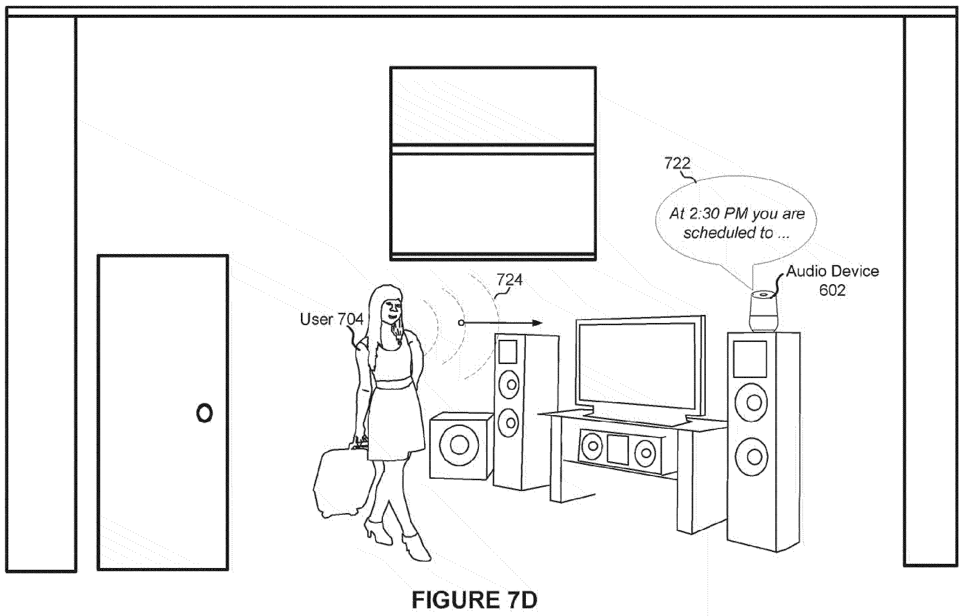

Figure 7D shows the audio device 602 continuing to audibly communicate with the user 704 via audio response 722 and concurrently receiving reflected signals 724. In some implementations, the audio device 602 determines an updated positioning of the user based on the reflected signals 724. In some implementations, the audio device 602 adjusts presentation of information for the user based on the user's positioning. For example, the audio device 602 adjusts a volume level of audio responses and/or adjusts a zoom level of visual presentations. In some implementations, the audio device includes a display and adjusts a font size of text on the display based on the user's 704 relative distance to the device 602. In some implementations, the audio device 602 includes multiple speakers and the audio device 602 uses a first speaker to greet 708 the user (in accordance with a determination that the first speaker is optimal based on the user's initial positioning) and responds via a second speaker with response 722 (in accordance with a determination that the second speaker is optimal based on the user's updated positioning).

Thus, as illustrated in Figures 7A-7D, the audio device 602 audibly communicates with a user while using inaudible signals to determine positioning of the user, in accordance with some implementations. As discussed above, the audio device 602 optionally uses the same speaker and microphone for both the audible and inaudible signals, and optionally modulates its audible communications with the user based on the user's positioning.

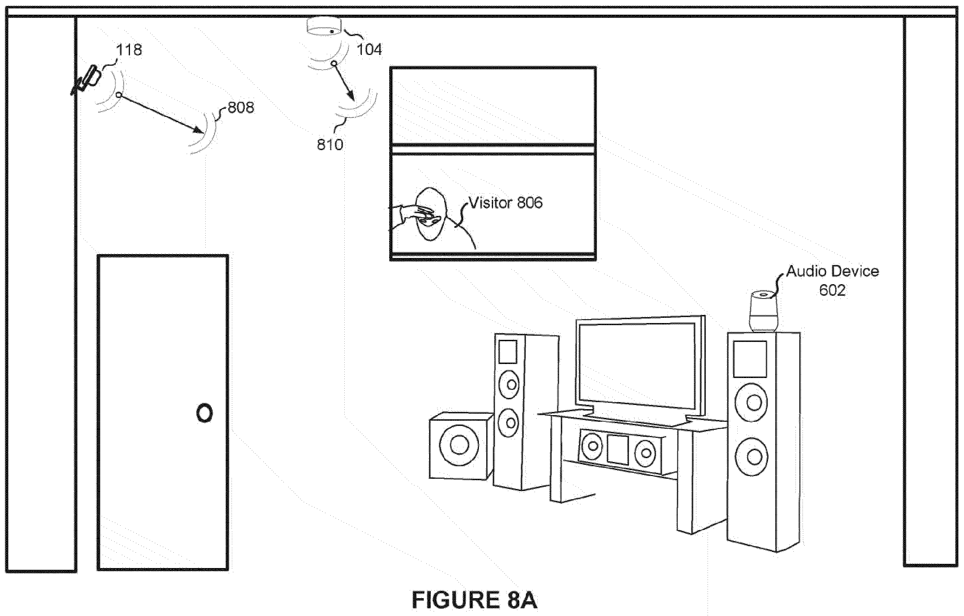

Figures 8A-8C illustrate a representative operating sequence for a plurality of smart devices 204 in accordance with some implementations. Figure 8A shows a camera device 118, a hazard detector 104, and an audio device 602 (collectively "smart devices"), and a visitor 806 at a window of the smart home environment. Figure 8A further shows the camera device 118 emitting signals 808 and the hazard detector 104 emitting signals 810. In some implementations, the signals 808 are radio frequency signals governed by a radar module on the camera device 118. In some implementations, the signals 808 are ultrasonic signals governed by an ultrasound module on the camera device 118. In some implementations, the signals 810 are radio frequency signals governed by a radar module on the hazard detector 104. In some implementations, the signals 810 are ultrasonic signals governed by an ultrasound module on the hazard detector 104. In some implementations, the signals 808 and 810 are emitted concurrently sent at distinct frequencies (e.g., different ultrasonic or radio frequencies). In some implementations, the signals 808 and 810 are staggered in time so as not to interfere with one another.

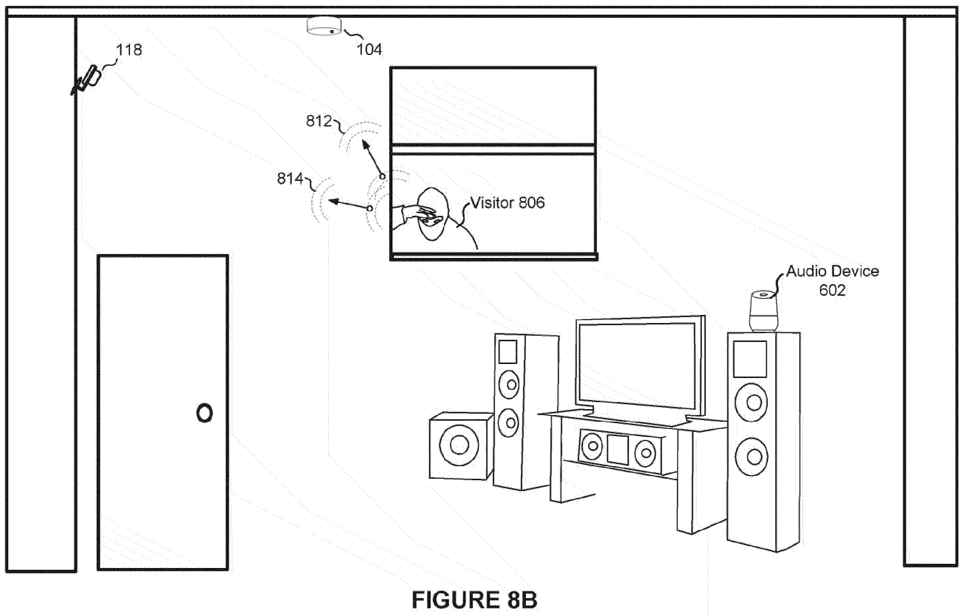

Figure 8B shows reflected signals 814 corresponding to emitted signals 808 and reflected signals 812 corresponding to emitted signals 810. In some implementations, the camera device 118 analyzes the reflected signals 814 to detect the presence of the visitor 806. In some implementations, the hazard detector 104 analyzes the reflected signals 812 to detect the presence of the visitor 806. In some implementations, data regarding the reflected signals is shared between the camera device 118 and the hazard detector 104 to determine the presence of the visitor 806. As an example, the camera device 118 may be emitting ultrasonic pulses that are reflected by the window and the hazard detector 104 may be emitting radio frequency pulses that travel through the window and reflect off of the visitor 806. In this example, the camera device 118 and the hazard detector 104 may share information to determine that the visitor 806 is outside of the closed window.

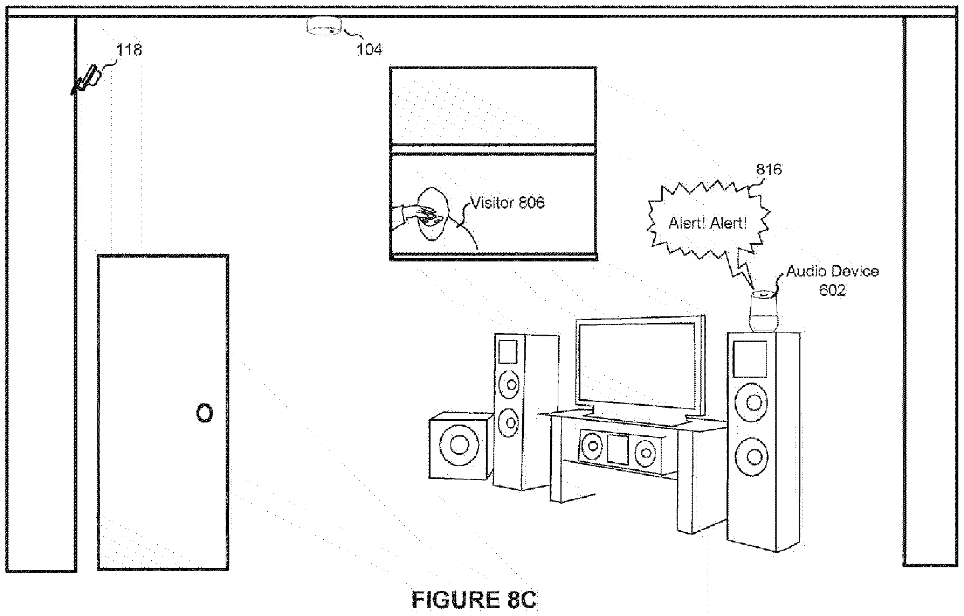

Figure 8C shows an alert response 816 emitted by the audio device 602 in response to detection of the visitor 806. In some implementations, the alert response 816 is based on characterization of the detected event. In some implementations, characterization of the event includes characterization of the visitor 806 and context information (e.g., time of day, security state of the home, etc.). For example, the alert is generated in response to one or more of: a determination that the visitor is unknown to the smart home system, a determination that a visitor was not expected, a determination that a visitor should not linger at the window, a determination that the visitor is wearing a mask, and the like. In some implementations, the characterization of the event is based on sensor data from multiple smart devices (e.g., the camera device 118, the hazard detector 104, and the audio device 602).

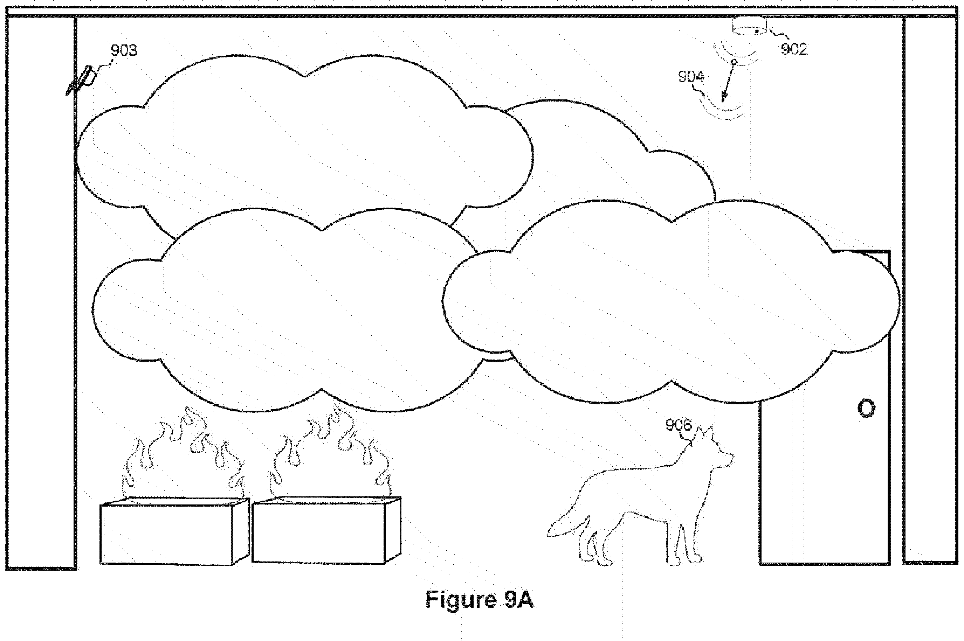

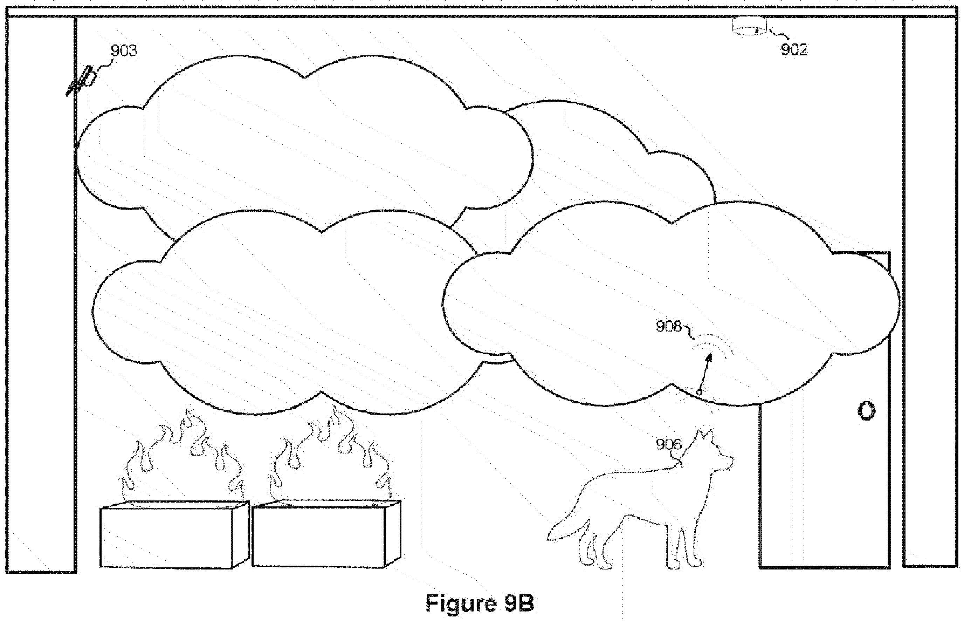

Figures 9A-9C illustrate another representative operating sequence for a plurality of smart devices 204 in accordance with some implementations. Figure 9A shows a first room (e.g., a garage) in which a camera device 903 and a hazard detector 902 are positioned. Figure 9A further shows a fire in the room and smoke obscuring the view between the camera device 903 and a dog 906 ("Sparky"). Figure 9A also shows the hazard detector 902 emitting signals 904 (e.g., ultrasonic or radio frequency signals). Figure 9B shows signals 908, corresponding to the emitted signals 904, reflecting from Sparky back to the hazard detector 902. In some implementations, the hazard detector 902 analyzes the signals to determine that Sparky is present in the room, to identify Sparky, and/or to assess the health of Sparky (e.g., based on respiratory patterns). In some implementations, the camera device 903 and/or the hazard detector 902 has one or more of: a temperature sensor to detect the heat from the fire, a smoke detector to detect the presence of smoke in the room, a microphone to detect audible sounds from the fire and/or Sparky, a PIR sensor to detect movement within the smoke, and the like. In some implementations, data from multiple sensors is analyzed to determine that: (1) a fire is present in the room, (2) visibility in the room is low, and (3) Sparky is present in the room near the door. In some implementations, the hazard detector 902 alerts emergency personnel (e.g., a nearby fire station) of the presence of the fire and Sparky in the garage.

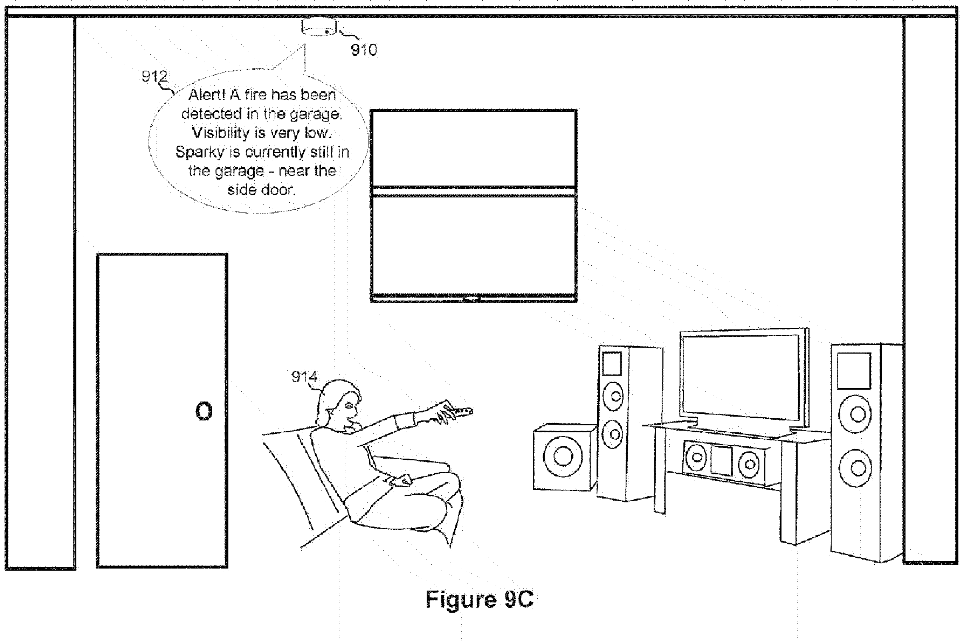

Figure 9C shows a second hazard detector 910 alerting the user 914 via audible response 912. In some implementations, the hazard detector 910 receives data from the camera device 930 and the hazard detector 902 and assess the situation in the garage to generate the audible response 912. In some implementations, the hazard detector 902, or another remote device or server, assesses the situation in the garage, determines a location of the user 914, determines that the hazard detector 910 is the optimal smart device to alert the user 914, and relays the response (e.g., via Wi-Fi, Bluetooth, or the like) to the hazard detector 910 to present to the user. In some implementations, an optimal smart device to alert the user is selected based on one or more of: distance to the user, line-of-sight with the user, within audible range of the user, audible capabilities of the device(s). In some implementations, the hazard detector 902 informs the user that emergency personnel have been alerted and advises the user to evacuate to a safe distance. In some implementations, the hazard detector 902 provides the user with an estimated time of arrival of the emergency personnel (e.g., based on traffic conditions and information from the alerted personnel).

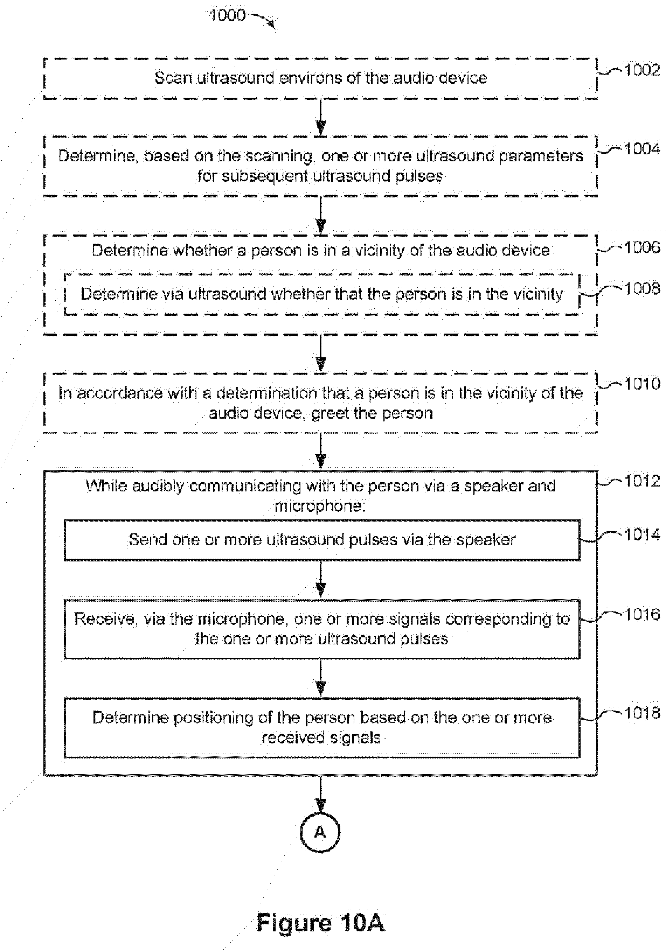

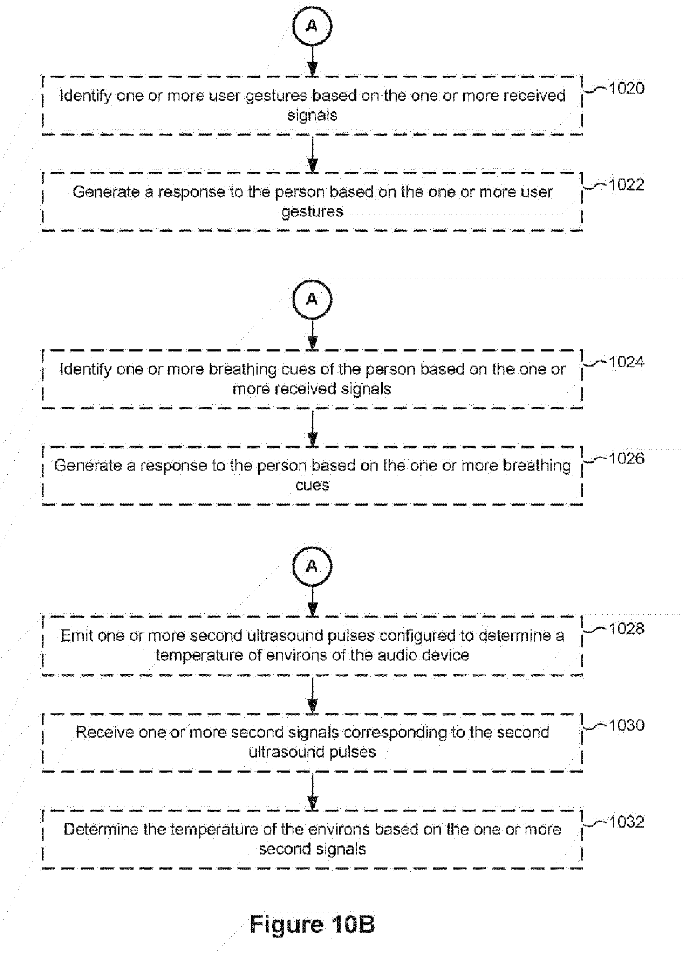

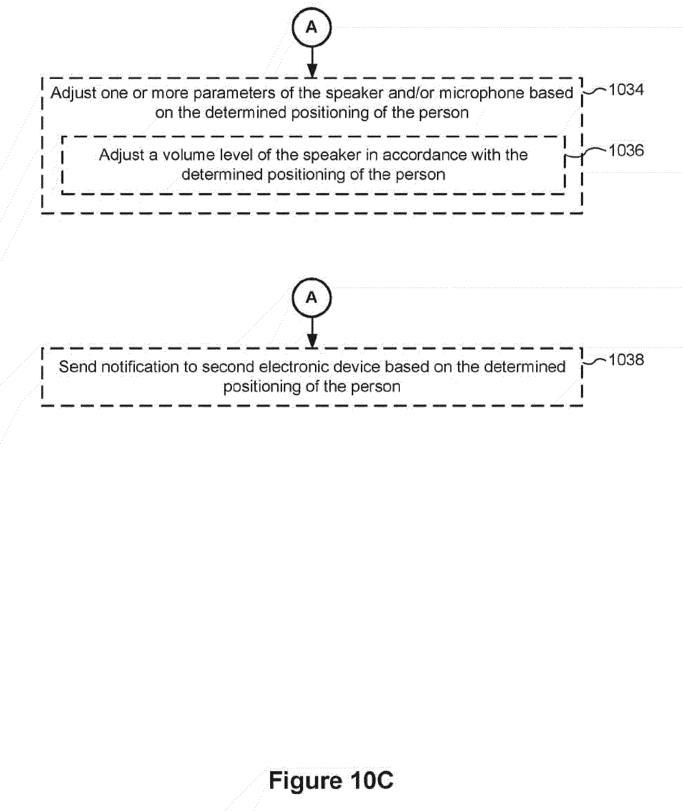

Figures 10A-10C are flow diagrams illustrating a method 1000 of operation for a representative audio device in accordance with some implementations. In some implementations, the method 1000 is performed by an audio device, such as the audio device 479, or other audio-equipped smart device 204 (e.g., a camera device 118 or hazard detector 102). In some implementations, the method 1000 is performed by a user device, such as the client device 220. In some implementations, the method 1000 is performed by components of a smart device 204, such as sensor module 444 and user interface module 434 in conjunction with user interface 410 and sensor(s) 422. In some implementations, the operations of the method 1000 described herein are interchangeable, and respective operations of the method 1000 are performed by any of the aforementioned devices. In some embodiments, the method 1000 is governed by instructions that are stored in a non-transitory computer-readable storage medium and that is executed by one or more processors or controllers of a device, such as the processor(s) 402 of the smart device 204. For convenience, the method 1000 is described below as being performed by an audio device.

In some implementations, the audio device scans (1002) ultrasound environs of the audio device (e.g., as shown in Figures 6A-6B). In some implementations, scanning the ultrasound environs includes monitoring incoming ultrasonic noise and/or signals between emitted ultrasound pulses to determine background noise and/or a room ultrasound profile. In some implementations, the audio device scans the environs via radio frequency analysis (radar) and/or wireless communication (e.g., Wi-Fi) signal analysis (e.g., to determine distances to objects and/or boundaries in the vicinity of the audio device).

In some implementations, the audio device determines (1004), based on the scanning, one or more ultrasound parameters for subsequent ultrasound pulses. For example, the audio device adjusts a frequency, amplitude, and/or intensity of the ultrasound pulses based on a signal-to-noise ratio for each frequency. In some implementations, determining the parameters includes adjusting timing of pulses to offset from other ultrasonic sources. In some implementations, determining the parameters includes identifying the speaker's ultrasonic band local max region(s) (e.g., 32 kHz) and adjusting the parameters to emit ultrasonic bursts (e.g., chirps) at the local max (e.g., via a 29 kHz - 35 kHz sweep). In some implementations, the audio device determines, based on the scanning, one or more audible parameters for subsequent audible outputs (e.g., for subsequent music, TTS, or audiovisual content). In some implementations, based on the scanning, the audio device identifies room boundaries and/or objects within the room.

In some implementations, based on the scanning, the audio device performs a room automatic equalization process. For example, the audio device adjusts one or more bass frequency parameters based on the ultrasonic scanning (e.g., based on the identified room boundaries and/or objects).

Manual room equalization is typically a cumbersome process that must be repeated each time the room or placement changes. A user must have a microphone and has to record audio output responses at various positions in a room using the microphone. The user must then apply the required correction based on the collected responses. Furthermore, this manual equalization process requires a lot of knowledge about speakers, microphones, and rooms, which is too advanced for the average user. Automatic audio equalization provides an opportunity for users to achieve the best listening experience and at the same time, avoid the need for any setup or calibration process. Moreover, an automatic equalization process enables a user to rearrange the room or move the speakers without having to worry about conducting another tiresome manual equalization.

In accordance with some implementations, an automated equalization method uses microphones within the device to sense the relative contributions of a wave traveling from the device toward the wall(s) behind and any waves reflected from those walls. In some instances and implementations, a certain delay, or phase shift, from a wave directly from the speaker is anticipated between the microphones; and a reduction of that delay or phase shift is anticipated between the microphones for a wave reflecting off the wall(s) behind the speaker.

In some implementations, the relative phase (phase difference) between one or more microphones is measured. In some implementations, a frequency (acoustic) response is determined using relative amplitude spectral features. In some implementations, relative amplitude spectral features are used in combination with microphone matching and/or calibration. In some instances and implementations, giving weight the phase differences minimizes the impact of differences in sensitivities between the microphones on the equalization process. In some implementations, equalization comprises correcting the frequency response at below a threshold frequency (e.g., below about 300 Hz, where the wavelength is about 1.1 m). In some instances and implementations, only the frequencies below the threshold frequency propagate in all directions, including backwards, from a speaker, and therefore are the only frequencies impacted by walls or corners behind the speaker.

In some implementations, the relative positioning of the microphones with respect to one another is obtained and used to determine phase differences. In some implementations, the automatic equalization is performed without any information regarding relative positioning of the microphones with respect to the speaker(s).

In some implementations, the automatic equalization is carried out based on an acoustical model. In some implementations, the device learns and recognizes patterns based on room position, and applies a corresponding equalization correction.

In some implementations, the automatic equalization is carried out using machine learning. In some implementations, machine learning comprises training the device on desired corrections for a range of positions and/or frequencies (e.g., training targets can be obtained from expert listeners, or by measuring the spectrum at auxiliary microphones in the listening area, or by the ABC method using auxiliary microphones in front of the speaker driver).

In some implementations, the one or more ultrasound parameters include one or more frequency settings and/or one or more timing settings. For example, the audio device analyzes the scan data and determines that a room in which the audio device is situated is 10 feet long. In this example, the audio device adjusts the parameters of subsequent ultrasound pulses to be able to detect users/persons within 10 feet (and to minimize scanning outside of 10 feet). In some implementations, the audio device limits the detection range by adjusting (e.g., increasing) a chirp rate, chirp duration, and/or intensity.

In some implementations, scanning the ultrasound environs includes sending one or more test pulses. In some implementations, scanning the ultrasound environs includes determining a signal-to-noise ratio for each of a plurality of frequencies.

In some implementations, the audio device determines (1006) whether a person is in a vicinity of the audio device. In some implementations, the audio device utilizes ultrasound signals to determine (1008) whether the person is in the vicinity. In some implementations, the audio device determines that a person (e.g., a user) is in the vicinity by determining that motion is present and characterizing the motion (e.g., determining that the motion is consistent with a person walking, breathing, or skipping).

In some implementations, the audio device: (1) detects motion via a sensor of the audio device (e.g., a PIR sensor); (2) in response to detecting the motion, sends one or more second ultrasound pulses; (3) receives one or more second signals corresponding to the one or more second ultrasound pulses; and (4) characterizes the motion based on the one or more second signals. In some implementations, the sensor comprises a radar component, a Wi-Fi signal analysis component, an image sensor, a PIR sensor, and/or an ALS. In some implementations, a duty cycle of the ultrasound pulses is based on whether motion (or an entity/user) has been detected. For example, the audio device emits an ultrasonic pulse once per second when a user is present and once per minute when a user is not present (e.g., to conserve energy and/or minimize interference with other devices). As another example, the audio device emits ultrasonic pulses with lower intensity when a user is closer to the device and with higher intensity when the user is farther away from the device. In some implementations, the audio device enables a virtual assistant feature based on the characterized motion (e.g., enables hotword detection, greets the user, communicatively couples to a virtual assistant server, and the like). In some implementations, the audio device sends a continuous ultrasonic wave and receives one or more signals corresponding to the continuous wave.

In some implementations, the audio device identifies the user based on the one or more received signals (e.g., based on respiratory patterns, gait, and/or cardiac patterns).

In some implementations, the audio device is configured to operate in three distinct ultrasound modes, including: a first mode for occupancy detection (e.g., with a lowest rate of chirps); a second mode for determining positioning (e.g., triggered after motion is detected in the first mode); and a third mode (e.g., with a highest rate of chirps) for movement analysis, such as respiratory or gesture characterization. As an example, in the third mode, for movement analysis, the audio device is configured to emit chirps with a frequency between 25 kHz and 45 kHz with a 10 millisecond (ms) to 100 ms pulse duration and a 25-75% duty cycle. In some implementations, the first mode utilizes a highest intensity or volume for the ultrasonic pulses, and the second and third modes reduce the intensity or volume for the ultrasonic pulses based on a distance to the user.

In some implementations, the audio device greets (1010) the person in accordance with a determination that the person is in the vicinity of the audio device. In some implementations, the audio device identifies the person as a particular user and the greeting is a personalized greeting (e.g., as shown in Figure 7B).

While audibly communicating with the person via a speaker and microphone (1012), the audio device sends (1014) one or more ultrasound pulses via the speaker. For example, the ultrasound pulses are interlaced with audible responses to the user. In some implementations, each ultrasound pulse of the one or more ultrasound pulses is a chirp sweeping across multiple frequencies. In some implementations, the ultrasound pulses are in the range of 20 kHz to 90 kHz. In some implementations, the ultrasound pulses sweep a range of frequencies (e.g., 25 kHz - 30 kHz). In some implementations, each ultrasound pulse has a duration between 0.1 and 50 milliseconds. In some implementations, the ultrasound pulses have a duty cycle between 1% and 50%.

While audibly communicating with the person via a speaker and microphone (1012), the audio device receives (1016), via the microphone, one or more signals corresponding to the one or more ultrasound pulses. In some implementations, the audio device is configured to have a sampling rate greater than 90 kHz. In some implementations, the audio device is configured to have a ping rate of 10 Hz.

While audibly communicating with the person via a speaker and microphone (1012), the audio device determines (1018) positioning of the person based on the one or more received signals (e.g., based on impulse responses or linear sums). In some implementations, SONAR techniques are used to determine positioning of the person. In some implementations, the SONAR techniques are used to determine human static occupancy, proximity, human breathing rates, over-the-air gestures (e.g., waving hands), posture, and/or relative room temperature. In some implementations, the audio device determines positioning of the person by isolating the ultrasonic band, performing an absolute value operation, and summing over time. In some implementations, after determining the positioning the user, the audio device adjusts a gain or volume level of subsequent audible communications and/or ultrasonic pulses (e.g., so as to minimize noise pollution and reduce interference with other audio devices in the smart home environment). For example, after identifying a position of a person who is a participant in an audible/spoken communication/conversation with the audio device, the audio device can increase or decrease the volume of its audible outputs that are part of that communication/conversation to provide an ideal/consistent volume at the user's position. In some implementations, the ideal volume is determined to approximate a default/predefined sound level at the user's position; an inferred speaking volume of the user based on the user's determined position; or an appropriate sound level at the user's position based on a combination of any one or more of the above factors and/or contextual information, such as time of day, location in a home environment of the device, a background environmental sound level, hearing capabilities of the user, and presence and location of other persons in vicinity of the audio device. For example, in accordance with a determination that a user is quite distant from the device and the time of day is mid-day, the device increases a text-to-speech (TTS) volume to ensure that the user is able to hear and understand the subsequent audible output. As another example, in accordance with a determination that the user is quite close and one or more children are sleeping nearby, the device decreases the TTS volume to a level where the user is able to hear and understand the subsequent audible output, while minimizing the impact on the children.

In some implementations, determining positioning of the user includes determining a distance between the user and the audio device. In some implementations, the audio device identifies movement of the user based on the received signals. For example, the audio device identifies the movement as the user sitting down and offers to adjust room lighting and/or turn on an entertainment system.

In some implementations: (1) the audio device receiving positioning data from one or more second audio devices; and (2) determining the positioning of the user is further based on the received positioning data. In some implementations, the received positioning data includes ultrasound data, radar data, channel state information (CSI), relative signal strength information (RSSI), visual imaging data, and/or PIR data.

For example, the audio device: (1) sends one or more radar pulses via a transmitter at the audio device; and (2) receives, via a receiver at the audio device, one or more second signals corresponding to the one or more radar pulses. In this example, the positioning of the user is determined based in-part on the one or more second signals. In some implementations, the radar data is further used to track the user behind obstructions (e.g., walls and objects) and/or in low light situations.

As another example, the audio device receives one or more wireless communication signals, and in this example, the positioning of the user is further based on analysis of the one or more wireless communication signals, such as channel state information (CSI), received signal strength information (RSSI), and/or bandwidth (BW) information of a Wi-Fi signal. In some implementations, the CSI and/or RSSI is further used to (1) detect motion (e.g., determine if an entity is in proximity); and (2) synchronize with remote devices (e.g., other smart devices 204 in the smart home environment).

As another example, the audio device captures, via an image sensor of the audio device, one or more images of a scene in a field of view of the audio device, and in this example, the positioning of the user is further based on analysis of the one or more images of the scene.

In some implementations, the audio device differentiates between the user and one or more additional entities (e.g., tracks and/or identifies) based on the one or more received signals. In some implementations, the differentiating is further based on additional ultrasound data, radar data, channel state information (CSI), relative signal strength information (RSSI), visual imaging data, and/or PIR data. In some implementations, differentiating between the user and additional entities includes identifying distinct respiratory, cardiac, and/or gait patterns.

In some implementations, the audio device identifies (1020) one or more user gestures based on the one or more received signals. In some implementations, the audio device generates (1022) a response to the person based on the one or more user gestures. For example, the audio device identifies one or more hand, foot, or head gestures as a user response (e.g., shaking of the head) and responds accordingly. As an example, while outputting audible content, the audio device identifies a user gesture corresponding to a pause function and, in response, pauses the audible content. In some implementations, the audio device utilizes multiple microphones (at varying distances from the user) to identify three-dimensional gestures from the user.

In some implementations, the audio device identifies (1024) one or more breathing cues of the person based on the one or more received signals. In some implementations, the audio device generates (1026) a response to the person based on the one or more breathing cues. For example, the audio device may detect a breathing problem with the user and notify emergency services. As another example, the audio device is optionally configured to monitor a baby's breathing patterns and notify the baby's guardians if a potential issue is detected. As another example, the audio device may detect that a user is distressed and offer assistance.

In some implementations, the audio device emits (1028) one or more second ultrasound pulses configured to determine a temperature of the environs of the audio device. In some implementations, the audio device receives (103) one or more second signals corresponding to the second ultrasound pulses. In some implementations, the audio device determines (1032) a temperature of the environs based on the one or more second signals. For example, the audio device uses time-of-flight information to identify changes in temperature and/or determine a room temperature.

In some implementations, the audio device adjusts (1034) one or more parameters of the speaker and/or the microphone based on the determined positioning of the person. In some implementations, the audio device adjusts (1036) a volume level of the speaker in accordance with the determined positioning of the person (e.g., adjusting a gain of the speaker). In some implementations, the audio device has a plurality of speakers and a particular speaker is selected for audible communications based on the determined positioning. In some implementations, the audio device includes a plurality of microphones and a particular microphone is selected for attending to the user based on the determined positioning. In some implementations, the audio device has a plurality of speakers and a particular speaker is selected for subsequent ultrasonic pulses based on the determined positioning. In some implementations, the audio device includes a plurality of microphones and a particular microphone is selected for receiving subsequent ultrasonic pulses based on the determined positioning.

In some implementations, the audio device sends (1038) a notification to a second electronic device (e.g., "wakes up" the second device) based on the determined positioning of the person. For example, the audio device determines that the user is near, or approaching, a second device (e.g., the user is within sensor range) and sends a notification to the second device.

In some implementations, the audio device is configured to optionally emit ultrasonic pulse(s) configured to discourage an animal (e.g., an animal that can hear sounds in the ultrasonic range) from approaching the audio device. For example, to keep wild animals away from a smart home environment, or to enable a user to discourage a pet from entering a particular area (e.g., the user's office).

In some implementations, the audio device determines that an animal (e.g., a family pet that can hear sounds in the ultrasonic range) is in the vicinity and adjusts one or more parameters of subsequent ultrasonic pulses (e.g., modulates subsequent pulses) to minimize upsetting the animal. For example, the audio device adjusts to a higher frequency than the animal can hear, or the audio device decreases an intensity, amplitude, and/or duty cycle to decrease an effect on the animal.

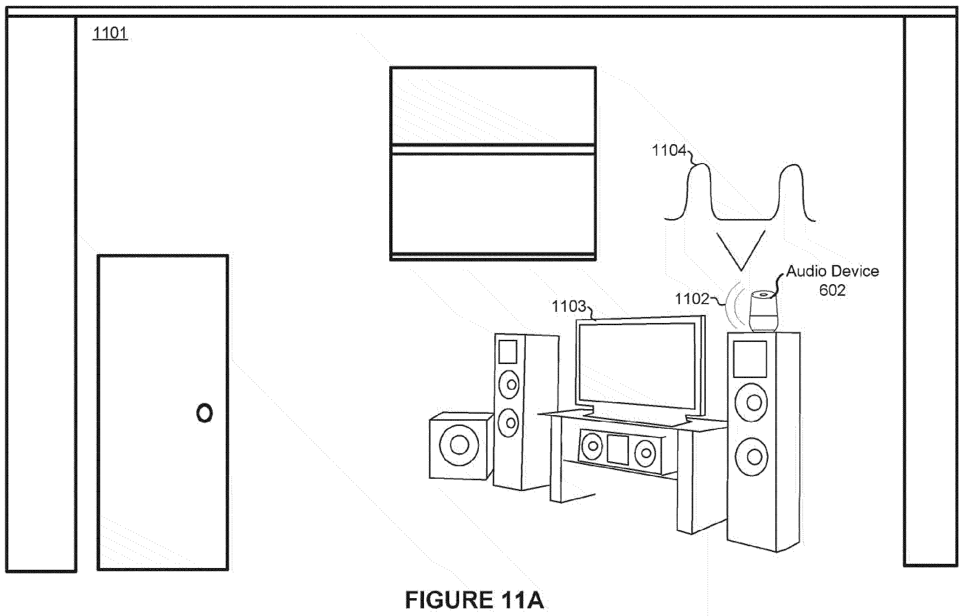

Figures 11A-11C illustrate another representative operating sequence for the audio device 602 in accordance with some implementations. Figure 11A shows the audio device 602 positioned within a room 1101 emitting ultrasonic chirps 1102 with an amplitude and period illustrated by waveform 1104. In accordance with some implementations, no person has been detected in the room 1101 and thus the waveform 1104 has a large amplitude (e.g., to have sufficient power to sense the entire room) and a long period (e.g., to conserve power and allow a chirp 1102 sufficient time to travel across the room and return without interference from subsequent chirps). In some implementations, the operation illustrated in Figure 11A corresponds to a first state (e.g., a state corresponding to no detected motion). For example, the audio device may emit 1 chirp every second, 5 seconds, or 10 seconds while in the first state. Figure 11A further shows a display 1103 without any display message (e.g., in a low power (sleep) state).

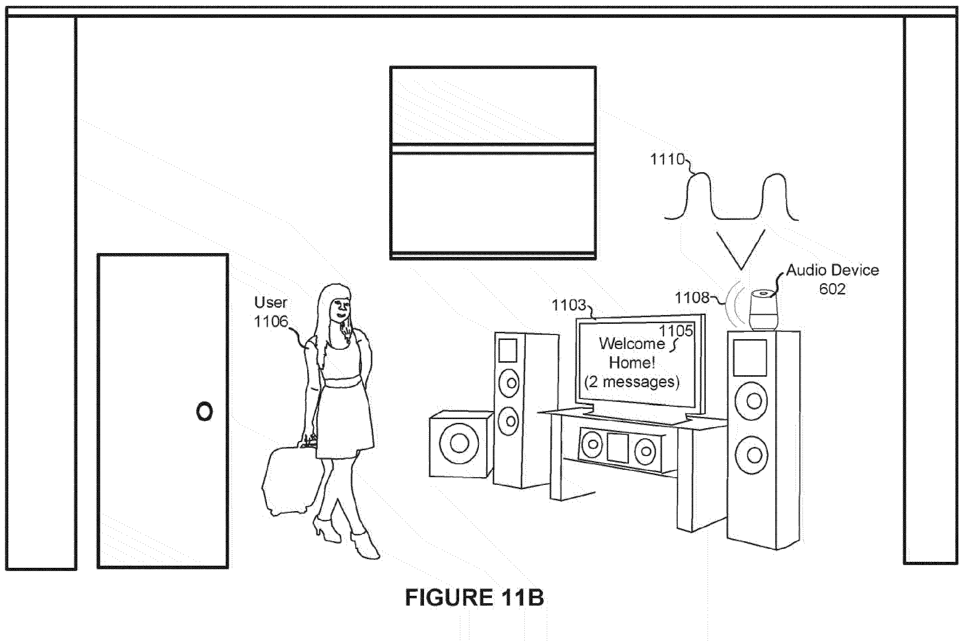

Figure 11B shows a user 1106 having entered the room 1101 and the audio device 602 emitting ultrasonic chirps 1108 with corresponding waveform 1110 in accordance with detection of the user 1106. In accordance with some implementations, the waveform 1110 has a lower amplitude (e.g., to conserve power and reduce interference with other devices) and shorter period (e.g., to monitor the positioning of the user 1106 and/or detect smaller movements such as hand gestures) than the waveform 1106. In some implementations, the operation illustrated in Figure 11B corresponds to a second state (e.g., a state corresponding to a user across the room from the device). For example, the audio device may emit 1, 5, or 10 chirps every second while in the second state. Figure 11B further shows the display 1103 with a message 1105 displayed for the user 1106 with a first magnification.

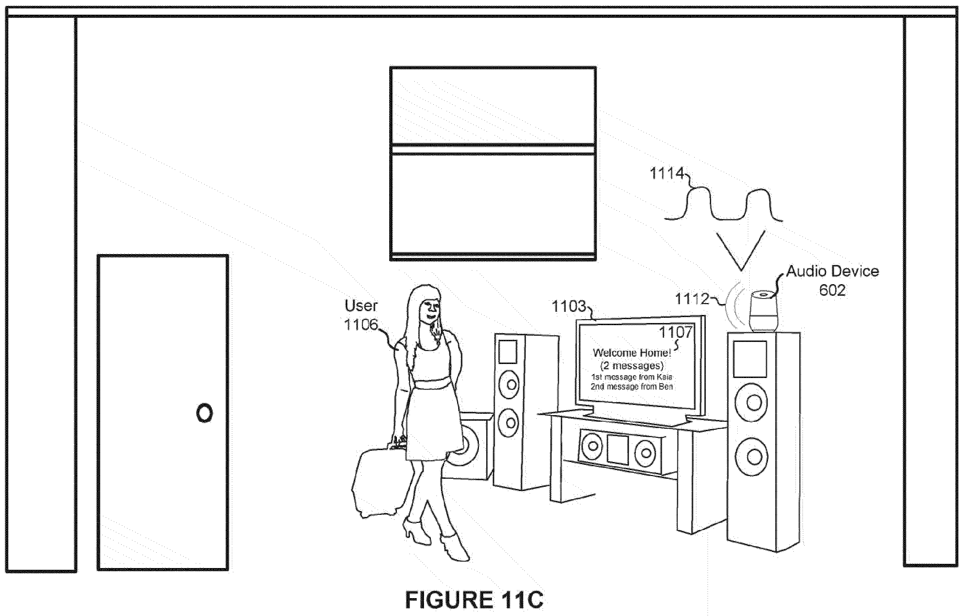

Figure 11C shows a user 1106 having moved closer to the audio device 602 and the audio device 602 emitting ultrasonic chirps 1112 with corresponding waveform 1114 in accordance with the proximity of the user 1106. In accordance with some implementations, the waveform 1114 has a lower amplitude (e.g., to conserve power and reduce interference with other devices) and shorter period (e.g., to monitor the positioning of the user 1106 and/or detect smaller movements such as hand gestures) than the waveform 1110. In some implementations, the amplitude and/or period of the ultrasonic chirps are based on the relative distance of the user 1106. In some implementations, the operation illustrated in Figure 11C corresponds to a third state (e.g., a state corresponding to a user interacting with the device). For example, the audio device may emit 10, 20, or 30 chirps every second while in the third state.

In some implementations, a subset of chirps emitted in the scenario illustrated in Figure 11C optionally have a higher amplification and longer period (e.g., similar to those in Figure 11A). For example, a periodic high amplitude chirp may be emitted to scan the room 1101 and determine if a second person has entered. In some implementations, a period for the chirps is selected based on a desired scan distance. For example, a first period is used to scan an entire room for motion, whereas a second period, less than the first period, is used to track a user who is halfway across the room. Figure 11C further shows the display 1103 with a message 1107 displayed for the user 1106 with a second magnification, less than the first magnification in Figure 11B, based on the user's 1106 closer proximity. In accordance with some implementations, the message 1107 includes additional information as compared to the message 1105. As illustrated in Figures 11A-11C, the audio device 602 is optionally coupled to a display and will wake up the display when the user 1106 is detected and/or adjust a magnification level of the display based on the relative distance to the user (e.g., to present a more efficient visual experience for the user). As shown in Figure 11C, the audio device 602 optionally adds additional information (e.g., additional text) to the display as the magnification level decreases.

In some implementations, the audio device 602 adjusts a volume of audible outputs and/or a magnification of visual displays based on the relative distance to the user 1106. For example, the audio device 602 reduces volume of audible outputs as the user 1106 approaches to conserve power and present a more consistent audio experience for the user.

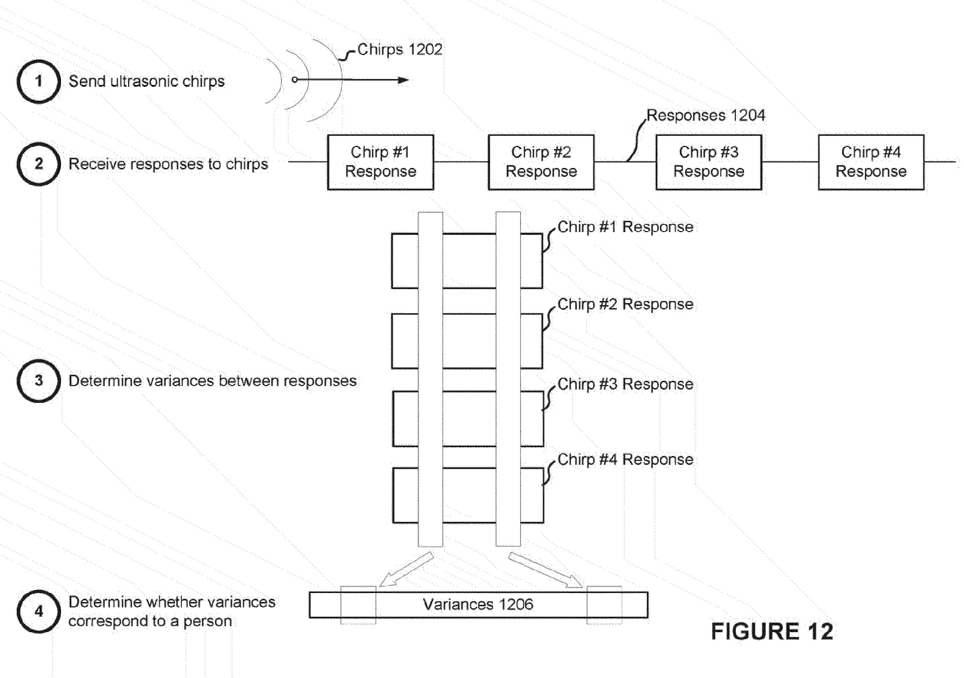

Figure 12 illustrates a representative operating sequence for a representative audio device in accordance with some implementations. First, the audio device (e.g., the audio device 602) emits ultrasonic chirps 1202 (e.g., with a given amplitude, frequency, and period). Second, the audio device receives response signals 1204 corresponding to the emitted chirps 1202. In some implementations, the audio device periodically emits chirps, e.g., timed so as to not interfere with the chirp responses 1204. Third, the audio device determines a variance between consecutive responses 1204. In some implementations, the audio device determines a variance across a most recent set of chirp responses, e.g., the most recent 5, 10, or 15 chirp responses. Fourth, the audio device determines based on an analysis of the variances 1206 whether a person is in proximity to the device. In some implementations, the audio device determines a relative distance to the person based on where in the chirp response the variance occurred, e.g., variance at the start of the chirp responses indicates a person is close to the device and variance at the end of the chirp responses indicates that a person is far from the device.

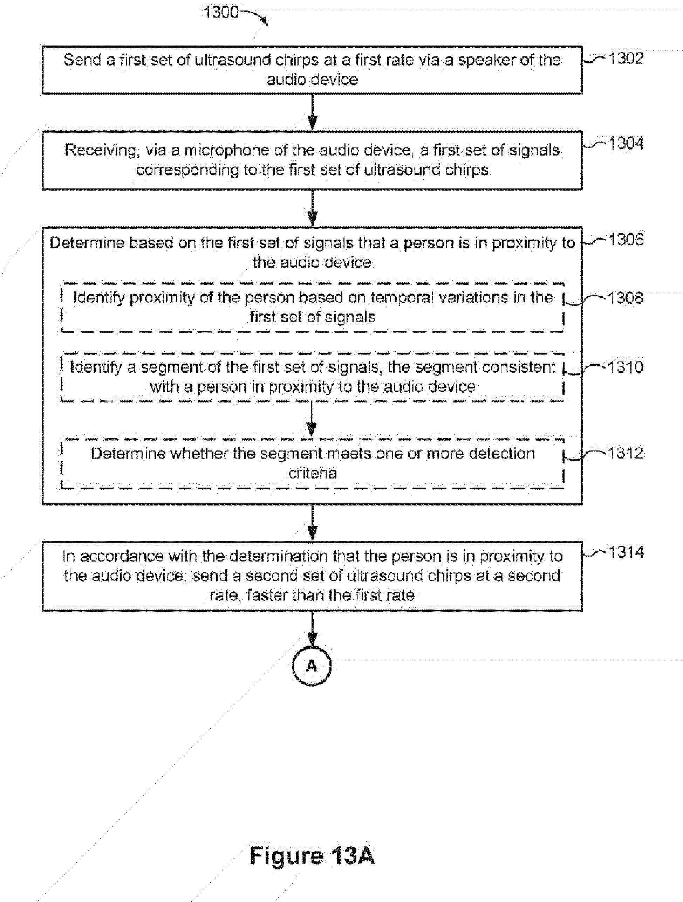

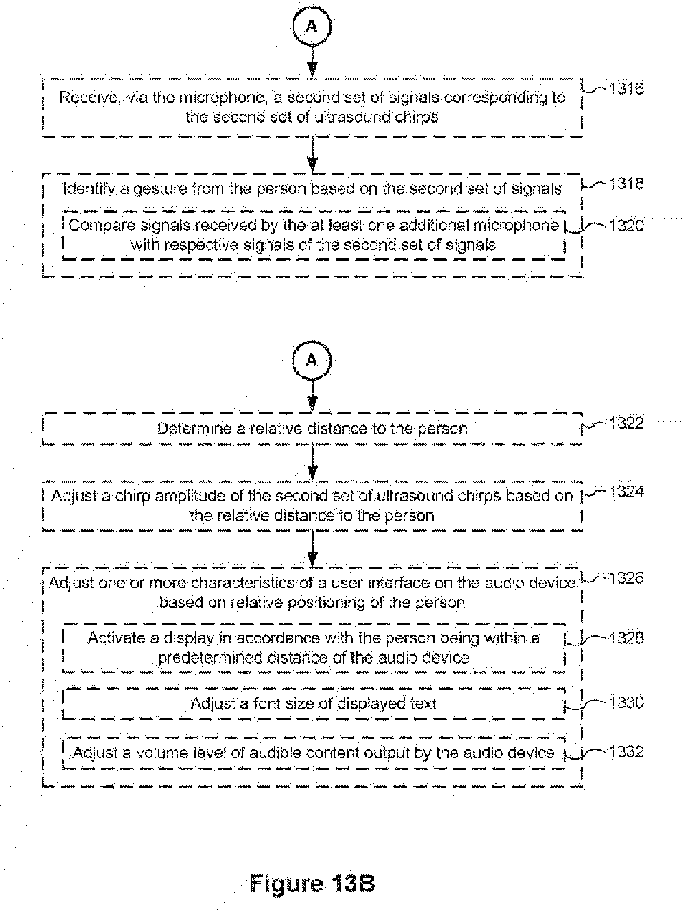

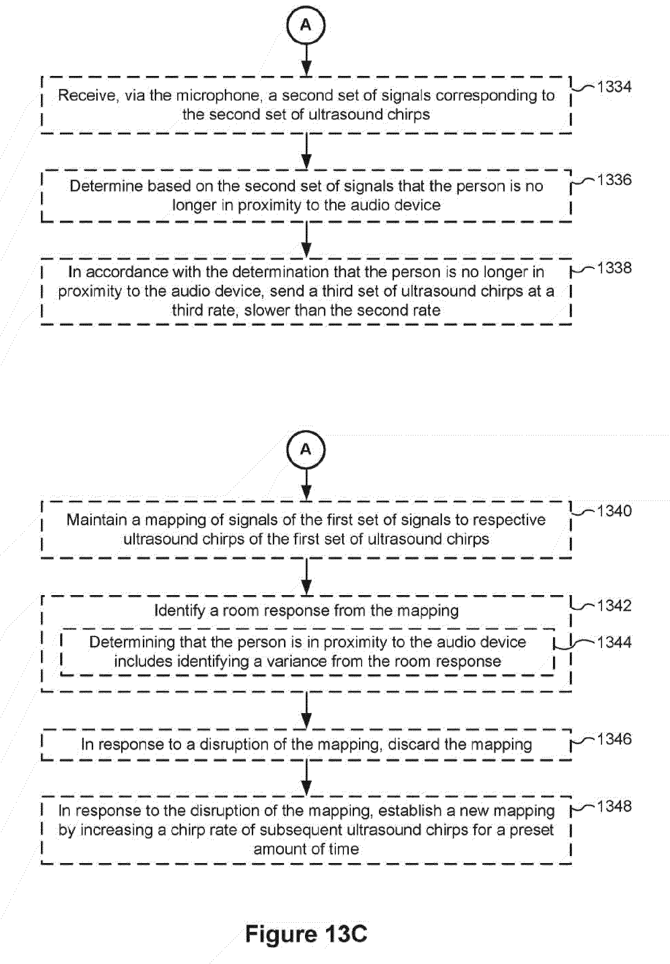

Figures 13A-13C are flow diagrams illustrating a method 1300 of operation for a representative audio device in accordance with some implementations. In some implementations, the method 1300 is performed by an audio device, such as the audio device 479, or other audio-equipped smart device 204 (e.g., a camera device 118 or hazard detector 102). In some implementations, the method 1300 is performed by a user device, such as the client device 220. In some implementations, the method 1300 is performed by components of a smart device 204, such as sensor module 444 and user interface module 434 in conjunction with user interface 410 and sensor(s) 422. In some implementations, the operations of the method 1300 described herein are interchangeable, and respective operations of the method 1300 are performed by any of the aforementioned devices. In some embodiments, the method 1300 is governed by instructions that are stored in a non-transitory computer-readable storage medium and that is executed by one or more processors or controllers of a device, such as the processor(s) 402 of the smart device 204. For convenience, the method 1300 is described below as being performed by an audio device (e.g., the audio device 479).

The audio device sends (1302) a first set of ultrasound chirps (e.g., the chirps 1202) at a first rate via a speaker (e.g., the speaker 482-1) of the audio device (e.g., as illustrated in Figure 11A). For example, the first rate corresponds to 1 one chirp every 10 seconds, 30 seconds, or 1 minute. In some implementations, the audio device sends the first set of ultrasound chirps via a plurality of speakers (e.g., the speakers 482).

The audio device receives (1304), via a microphone (e.g., the microphone 480-1) of the audio device, a first set of signals (e.g., the responses 1204) corresponding to the first set of ultrasound chirps (e.g., as illustrated in Figures 4B and 12). In some implementations, the audio device receives the first set of signals via a plurality of microphones (e.g., the microphones 480). In some implementations, the audio device sends a continuous ultrasonic wave and receives one or more signals corresponding to the continuous wave.

The audio device determines (1306) based on the first set of signals that a person is in proximity to the audio device. In various implementations, proximity to the audio device corresponds to the person being within range of the ultrasound chirps, within audible range of the audio device, or within a preset threshold distance of the audio device (e.g., 20 feet, 10 feet, or 5 feet of the device). In some implementations, the audio device analyzes temporal differences between responses to determine if the differences are due to a person being in proximity to the audio device. In some implementations, the audio device compares the first set of signals to a room response for the room in which the audio device is positioned. In some implementations, the audio device identifies (1308) proximity of the person based on temporal variations in the first set of signals (e.g., as discussed above with respect to Figure 12).

In some implementations, the audio device is paired with a distinct second device (e.g., via Bluetooth) and utilizes relative device positioning to analyze and interpret variance in chirp responses. In some implementations, the audio device emits the first set of chirps and analyzes responses received at both the audio device and the second audio device (e.g., the second audio device sends response information to the audio device).

In some implementations and circumstances, the audio device detects, based on the first set of signals, that a confounding circumstance is present (e.g., a vibrating or rotating object in proximity to the audio device). In some implementations, in accordance with detecting the confounding circumstance, the audio device adjusts one or more detection criteria (e.g., the audio device masks out, or ignores, variance due to the confounding circumstance). In some implementations, adjusting the one or more detection criteria comprises increasing a proximity detection threshold (e.g., only scanning for motion within a reduced radius of the device). In some implementations, adjusting the one or more detection criteria comprises disabling proximity detection (or analysis) for a preset amount of time or until the confounding circumstance is no longer detected. Confounding circumstances may include a rotating fan, an active blender, or a change in air temperature, pressure, or humidity (e.g., due to activation of an air conditioner). In some implementations, the audio device includes one or more additional sensors (e.g., as illustrated in Table 1 above) to identify and/or overcome the confounding circumstance.

In some implementations, the audio device utilizes machine learning technique(s) to identify and/or mask confounding circumstances. In some implementations, the audio device utilizes machine learning technique(s) to distinguish moving persons from other types of motion or confounding circumstances. In some implementations, the audio device utilizes machine learning technique(s) to identify and distinguish between a plurality of user gestures, postures, and/or breathing patterns. For example, machine learning techniques are used to classify, identify, and respond to sign language from a user.

In some implementations, the audio device: (1) identifies (1310) a segment of the first set of signals, the segment consistent with a person in proximity to the audio device; and (2) determines (1312) whether the segment meets one or more detection criteria. For example, the audio device identifies a segment of the first set of signals indicating that motion is present 5 meters from the device and the audio device analyzes the motion to determine if it corresponds to a moving person (e.g., rather than a moving animal or rotating fan). In some implementations, determining whether the segment meets the one or more detection criteria includes determining whether the detected motion has a velocity, acceleration, and/or size consistent with that of a moving person.

In accordance with a determination that the person is in proximity to the audio device, the audio device sends (1314) a second set of ultrasound chirps at a second rate, faster than the first rate (e.g., as illustrated in Figure 11B). For example, the second rate corresponds to 1 one chirp every 1 second, 5 seconds, or 10 seconds. In some implementations, the audio device sends the second set of ultrasound chirps via a plurality of speakers (e.g., the speakers 482). In some implementations, the audio device audibly interacts with the person concurrently with sending the second set of ultrasound chirps (e.g., as illustrated in Figure 7C). In some implementations, the second set of chirps are sent with less amplitude or gain than the first set of chirps in accordance with a determination that less amplitude or gain is needed to characterize the person based on the relative distance to the person. In some implementations, the second set of chirps are sent with a different frequency and/or sampling rate than the first set of chirps (e.g., chirps in the second set have a higher or lower frequency as compared to chirps in the first set).

In some implementations, the audio device receives (1316), via the microphone, a second set of signals corresponding to the second set of ultrasound chirps. In some implementations, the second set of signals are analyzed to characterize movement of the person (e.g., characterize breathing patterns, gestures, postures, and/or expressions). For example, the audio device monitors sleep patterns for a person in proximity to the audio device and provide feedback to the person. In some implementations, the audio device identifies (1318) a gesture from the person based on the second set of signals. In some implementations, the audio device compares (1320) signals received by the at least one additional microphone with respective signals of the second set of signals (e.g., to triangular positioning and/or determine a directionality of detected movement).

In some implementations, the audio device determines (1322) a relative distance to the person. For example, the audio device determines a relative distance to the person based on where in the responses a variance is detected, as discussed above with respect to Figure 12. In some implementations, the audio device adjusts (1324) a chirp amplitude of the second set of ultrasound chirps based on the relative distance to the person.

In some implementations, the audio device adjusts (1326) one or more characteristics of a user interface on the audio device based on relative positioning of the person. For example, the audio device wakes up a display or adjusts a brightness level based on the relative positioning). In some implementations, adjusting the characteristic(s) includes reorienting a user interface based on the relative positioning (e.g., turning a display to face the person). In some implementations, the audio device activates (1328) a display in accordance with the person being within a predetermined distance of the audio device (e.g., as illustrated in Figure 11B). In some implementations, the audio device adjusts (1330) a font size of the displayed text (e.g., as illustrated in Figures 11B-11C). In some implementations, the audio device adjusts an amount of displayed text based on the relative distance (e.g., as illustrated in Figures 11B-11C). In some implementations, the audio device adjusts (1332) a volume level of audible content output by the audio device.

In some implementations, the audio device receives (1334), via the microphone, a second set of signals corresponding to the second set of ultrasound chirps.

In some implementations, the audio device determines based on the second set of signals that the person is in close proximity to the audio device (e.g., within 5 feet, 2 feet, or 1 foot of the device). In some implementations, in accordance with a determination that the person is in close proximity to the audio device, the audio device switches to an interaction mode. In some implementations, the interaction mode includes activating one or more user interface elements. In some implementations, the interaction mode includes reorienting the device to face the person. In some implementations, the interaction mode includes sending a third set of ultrasound chirps at a third rate, faster than the second rate. In some implementations, the interaction mode includes analyzing received signals corresponding to the third set of ultrasound chirps to identify user gestures and/or expressions. In some implementations, the interaction mode includes analyzing received signals corresponding to the third set of ultrasound chirps to monitor respiratory patterns of the user (e.g., to identify health concerns and/or determine mood of the person).

In some implementations, the audio device determines (1336) based on the second set of signals that the person is no longer in proximity to the audio device. For example, the second set of signals indicates that the person is moving, or has moved, away from the audio device beyond a threshold distance. In some implementations, in accordance with the determination that the person is no longer in proximity to the audio device, the audio device sends (1338) a third set of ultrasound chirps at a third rate, slower than the second rate. In some implementations, the third rate is the first rate.

In some implementations, the audio device maintains (1340) a mapping of signals of the first set of signals to respective ultrasound chirps of the first set of ultrasound chirps. For example, the audio device stores vectors and/or matrices of temporal variance between consecutive responses to sent chirps (e.g., stores the variances 1206 in Figure 12). In some implementations, the audio device locally stores the mapping, e.g., as a portion of the device data 458 within the memory 426.

In some implementations, the audio device identifies (1342) a room response from the mapping. In some implementations, the room response corresponds to a mapping of the room while the room is unoccupied. In some implementations, the room response comprises one or more vectors and/or matrices. In some implementations, the room response is stored locally in the audio device, e.g., as a portion of the device data 458 within the memory 426. In some implementations, the audio device obtains environmental data for environs of the audio device; and updates the identified room response based on the environmental data (e.g., updates the room response based on changing temperatures, pressures, or humidity within the room). In some implementations, the audio device includes one or more environmental sensors configured to detect changes in temperature, pressure, and/or humidity. In some implementations, the audio device receives the environmental data from a remote device or server.

In some implementations, determining that the person is in proximity to the audio device includes identifying (1344) a variance from the room response. For example, a response from one or more chirps is compared to the stored room response to determine if a person is in proximity.

In some circumstances, a disruption may occur in the mapping. For example, the audio device may be using all processing capabilities for other processes and/or experience a buffer overload (overflow) condition and fail to receive or analyze a chirp response. In some implementations, in response to a disruption of the mapping, the audio device discards (1346) the mapping. For example, the audio device determines that a disruption has occurred and discard the mapping as being out of date (e.g., rather than analyze variance based on the pre-disruption mapping).

In some implementations, in response to the disruption of the mapping, the audio device establishes (1348) a new mapping by increasing a chirp rate of subsequent ultrasound chirps for a preset amount of time. For example, the audio device determines that a disruption has occurred and sends chirps at a faster rate (e.g., two times, five times, or ten times the prior rate) so as to more quickly establish the new mapping. For example, prior to the disruption the device is emitting chirps at a rate of eight per second and after the disruption the device emits chirps at a rate of thirty per second to establish the new mapping (e.g., for 5, 10, or 30 chirps). In some implementations, the subsequent ultrasound chirps are sent at a rate that corresponds to a maximum rate for a desired scan distance (e.g., 10 milliseconds for a detection radius of 5 feet). In some implementations, in response to the disruption of the mapping, the audio device disables proximity detection (e.g., detection of persons in proximity to the device) until the new mapping is established.

Although some of various drawings illustrate a number of logical stages in a particular order, stages that are not order dependent may be reordered and other stages may be combined or broken out. While some reordering or other groupings are specifically mentioned, others will be obvious to those of ordinary skill in the art, so the ordering and groupings presented herein are not an exhaustive list of alternatives. Moreover, it should be recognized that the stages could be implemented in hardware, firmware, software or any combination thereof.

It will also be understood that, although the terms first, second, etc. are, in some instances, used herein to describe various elements, these elements should not be limited by these terms. These terms are only used to distinguish one element from another. For example, a first category could be termed a second category, and, similarly, a second category could be termed a first category, without departing from the scope of the various described implementations. The first category and the second category are both categories, but they are not necessarily the same category.

The terminology used in the description of the various described implementations herein is for the purpose of describing particular implementations only and is not intended to be limiting. As used in the description of the various described implementations and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

The foregoing description, for purpose of explanation, has been described with reference to specific implementations. However, the illustrative discussions above are not intended to be exhaustive or to limit the scope of the claims to the precise forms disclosed. It should be noted and understood that there can be improvements and modifications made of the present invention described in detail above without departing from the scope of the invention as set forth in the accompanying claims.

## Claims

1. A method of operation for an audio device (479; 602), comprising:
at the audio device (479; 602) having a memory, one or more processors (402), a speaker (482-1, 482-2), and a microphone (480-1, 480-2):
while audibly communicating with a user (704; 914; 1106):
utilizing the speaker (482-1, 482-2) and the microphone (480-1, 480-2);
sending a set of ultrasound chirps via the speaker (482-1, 482-2);
receiving, via the microphone (480-1, 480-2), a set of signals corresponding to the set of ultrasound chirps and being reflected from the user (704; 914; 1106);
determining a relative distance to the user (704; 914; 1106) based on the set of signals; and
adjusting one or more characteristics of a user interface (410; 510) on the audio device (479; 602) based on the relative distance to the user (704; 914; 1106).

2. The method of operation for the audio device (479; 602) of claim 1, wherein
adjusting the one or more characteristics comprises a font size of the user interface (410; 510) being adjusted based on the relative distance to the user (704; 914; 1106).

3. The method of operation for the audio device (479; 602) of claim 1, wherein adjusting the one or more characteristics comprises an audio volume of the user interface (410; 510) being adjusted based on the relative distance to the user (704; 914; 1106).

4. The method of operation for the audio device (479; 602) of claim 1, wherein adjusting the one or more characteristics comprises a display of the user interface (704; 914; 1106) being activated based on the relative distance to the user (704; 914; 1106) being within a predetermined distance threshold.

5. The method of operation for the audio device (479; 602) of claim 1, further comprising:
determining that the relative distance to the user (704; 914; 1106) is within a preset threshold distance of the audio device (479; 602).

6. The method of operation for the audio device (479; 602) of claim 5, wherein the set of ultrasound chirps is sent at a second rate, which is greater than a first rate at which a first set of ultrasound chirps was sent, based on determining that the relative distance to the user (479; 602) is within the preset threshold distance of the audio device (479; 602).

7. An audio device (479; 602), comprising:
one or more processors (402);
a microphone (480-1, 480-2);
a speaker (482-1, 482-2); and
memory storing one or more instructions that, when executed by the one or more processors (402), cause the audio device (479; 602) to:
while audibly communicating with a user (704; 914; 1106):
utilizing the speaker (482-1, 482-2) and the microphone (480-1, 480-2);
send a set of ultrasound chirps via the speaker (482-1, 482-2);
receive, via the microphone (480-1, 480-2), a set of signals corresponding to the set of ultrasound chirps and being reflected from the user (704; 914; 1106);
determine a relative distance to the user (704; 914; 1106) based on the set of signals; and
adjust one or more characteristics of a user interface (410; 510) on the audio device (479; 602) based on the relative distance to the user (704; 914; 1106).

8. The audio device (479; 602) of claim 7, wherein the instructions that cause the audio device (479; 602) to adjust the one or more characteristics comprises instructions to adjust a font size of the user interface (410; 510) based on the relative distance to the user (704; 914; 1106).

9. The audio device (479; 602) of claim 7, wherein the instructions that cause the audio device (479; 602) to adjust the one or more characteristics comprises instructions to adjust an audio volume of the user interface (410; 510) based on the relative distance to the user (704; 914; 1106).

10. The audio device (479; 602) of claim 7, wherein the instructions that cause the audio device (479; 602) to adjust the one or more characteristics comprises instructions to activate a display of the user interface (410; 510) based on the relative distance to the user (704; 914; 1106) being within a predetermined distance threshold.

11. The audio device (479; 602) of claim 7, wherein the memory further stores instructions that, when executed by the one or more processors (402), cause the audio device (479; 602) to:
determine that the relative distance to the user (704; 914; 1106) is within a preset threshold distance of the audio device (479; 602).

12. The audio device (479; 602) of claim 11, wherein the set of ultrasound chirps is sent at a second rate, which is greater than a first rate at which a first set of ultrasound chirps was sent, based on determining that the relative distance to the user (704; 914; 1106) is within the preset threshold distance of the audio device (479; 602).

13. A non-transitory computer-readable storage medium storing one or more programs, the one or more programs comprising instructions which, when executed by an electronic device with one or more processors, memory, a microphone, and a speaker, cause the electronic device to perform any of the methods of claims 1-6.

## Patentansprüche

1. Betriebsverfahren für ein Audiogerät (479, 602), umfassend: an dem Audiogerät (479, 602) das einen Speicher, einen oder mehrere Prozessoren (402), einen Lautsprecher (482-1, 482-2) und ein Mikrofon (480-1, 480-2) aufweist:
während eines akustischen Kommunizierens mit einem Benutzer (704, 914, 1106): Verwenden des Lautsprechers (482-1, 482-2) und des Mikrofons (480-1, 480-2); Senden eines Satzes von Ultraschall-Chirps über den Lautsprecher (482-1, 482-2); Empfangen, über das Mikrofon (480-1, 480-2) eines Satzes von Signalen, die dem Satz von Ultraschall-Chirps entsprechen und von dem Benutzer (704, 914, 1106) reflektiert werden;
Ermitteln einer relativen Entfernung zu dem Benutzer (704, 914, 1106) basierend auf dem Satz von Signalen; und
Anpassen eines oder mehrerer Charakteristika einer Benutzeroberfläche (410, 510) auf dem Audiogerät (479, 602) basierend auf der relativen Entfernung zu dem Benutzer (704, 914, 1106).

2. Betriebsverfahren für das Audiogerät (479, 602) nach Anspruch 1, wobei das Anpassen des einen oder der mehreren Charakteristika umfasst, dass eine Schriftgröße der Benutzeroberfläche (410, 510) basierend auf der relativen Entfernung zu dem Benutzer (704, 914, 1106) angepasst wird.

3. Betriebsverfahren für das Audiogerät (479, 602) nach Anspruch 1, wobei das Anpassen des einen oder der mehreren Charakteristika umfasst, dass eine Audiolautstärke der Benutzeroberfläche (410, 510) basierend auf der relativen Entfernung zu dem Benutzer (704, 914, 1106) angepasst wird.

4. Betriebsverfahren für das Audiogerät (479, 602) nach Anspruch 1, wobei das Anpassen des einen oder der mehreren Charakteristika umfasst, dass eine Anzeige der Benutzeroberfläche (704, 914, 1106) basierend darauf, dass die relative Entfernung zu dem Benutzer (704, 914, 1106) innerhalb einer vorbestimmten Schwellenentfernung liegt, aktiviert wird.

5. Betriebsverfahren für das Audiogerät (479, 602) nach Anspruch 1, ferner umfassend:
Ermitteln, dass die relative Entfernung zu dem Benutzer (704, 914, 1106) innerhalb einer vorbestimmten Schwellenentfernung von dem Audiogerät (479, 602) liegt.

6. Betriebsverfahren für das Audiogerät (479, 602) nach Anspruch 5, wobei der Satz von Ultraschall-Chirps mit einer zweiten Geschwindigkeit gesendet wird, die größer ist als eine erste Geschwindigkeit, mit der ein erster Satz von Ultraschall-Chirps gesendet wurde, basierend auf dem Ermitteln, dass die relative Entfernung zu dem Benutzer\ (479, 602) innerhalb der vorbestimmten Schwellenentfernung von dem Audiogerät (479, 602) liegt.

7. Audiogerät (479, 602), umfassend: einen oder mehrere Prozessoren (402);
ein Mikrofon (480-1, 480-2); einen Lautsprecher (482-1, 482-2); und
einen Speicher, der eine oder mehrere Anweisungen speichert, die bei Ausführung durch den einen oder die mehreren Prozessoren (402) das Audiogerät (479, 602) zu Folgendem veranlassen:
während des akustischen Kommunizierens mit einem Benutzer (704, 914, 1106):
Verwenden des Lautsprechers (482-1, 482-2) und des Mikrofons (480-1, 480-2);
Senden eines Satzes von Ultraschall-Chirps über den Lautsprecher (482-1, 482-2);
Empfangen, über das Mikrofon (480-1, 480-2), eines Satzes von Signalen, die dem Satz von Ultraschall-Chirps entsprechen und von dem Benutzer (704, 914, 1106) reflektiert werden;
Ermitteln einer relativen Entfernung zu dem Benutzer (704, 914, 1106) basierend auf dem Satz von Signalen; und
Anpassen eines oder mehrerer Charakteristika einer Benutzeroberfläche (410, 510) auf dem Audiogerät (479, 602) basierend auf der relativen Entfernung zu dem Benutzer (704, 914, 1106).

8. Audiogerät (479, 602) nach Anspruch 7, wobei die Anweisungen, die das Audiogerät (479, 602) veranlassen, das eine oder die mehreren Charakteristika anzupassen, Anweisungen umfassen, eine Schriftgröße der Benutzeroberfläche (410, 510) basierend auf der relativen Entfernung zu dem Benutzer (704, 914, 1106) anzupassen.

9. Audiogerät (479, 602) nach Anspruch 7, wobei die Anweisungen, die das Audiogerät (479, 602) veranlassen, das eine oder die mehreren Charakteristika anzupassen, Anweisungen umfassen, eine Audiolautstärke der Benutzeroberfläche (410, 510) basierend auf der relativen Entfernung zu dem Benutzer (704, 914, 1106) anzupassen.

10. Audiogerät (479, 602) nach Anspruch 7, wobei die Anweisungen, die das Audiogerät (479, 602) veranlassen, das eine oder die mehreren Charakteristika anzupassen, Anweisungen umfassen, eine Anzeige der Benutzeroberfläche (410, 510) basierend darauf zu aktivieren, dass die relative Entfernung zu dem Benutzer (704, 914, 1106) innerhalb einer vorbestimmten Schwellenentfernung liegt.

11. Audiogerät (479, 602) nach Anspruch 7, wobei der Speicher ferner Anweisungen speichert, die bei Ausführung durch den einen oder die mehreren Prozessoren (402) das Audiogerät (479, 602) veranlassen zum:
Ermitteln, dass die relative Entfernung zu dem Benutzer (704, 914, 1106) innerhalb einer vorbestimmten Schwellenentfernung von dem Audiogerät (479, 602) liegt.

12. Audiogerät (479, 602) nach Anspruch 11, wobei der Satz von Ultraschall-Chirps mit einer zweiten Geschwindigkeit gesendet wird, die größer ist als eine erste Geschwindigkeit, mit der ein erster Satz von Ultraschall-Chirps gesendet wurde, basierend auf dem Ermitteln, dass die relative Entfernung zu dem Benutzer (704, 914, 1106) innerhalb der vorbestimmten Schwellenentfernung von dem Audiogerät (479, 602) liegt.

13. Nichtflüchtiges computerlesbares Speichermedium, auf dem ein oder mehrere Programme gespeichert sind, wobei das eine oder die mehreren Programme Anweisungen umfassen, die, bei Ausführung durch ein elektronisches Gerät mit einem oder mehreren Prozessoren, einem Speicher, einem Mikrofon und einem Lautsprecher, das elektronische Gerät veranlassen, eines der Verfahren nach den Ansprüchen 1-6 durchzuführen.

## Revendications

1. Procédé de fonctionnement pour un dispositif audio (479 ; 602), comprenant :
au niveau du dispositif audio (479 ; 602) ayant une mémoire, un ou plusieurs processeurs (402), un haut-parleur (482-1, 482-2), et un microphone (480-1, 480-2) :
tout en communiquant de manière audible avec un utilisateur (704 ; 914 ; 1106) :
l'utilisation du haut-parleur (482-1, 482-2) et du microphone (480-1, 480-2) ;
l'envoi d'un ensemble de chirps ultrasonores via le haut-parleur (482-1, 482-2) ;
la réception, via le microphone (480-1, 480-2), d'un ensemble de signaux correspondant à l'ensemble de chirps ultrasonores et réfléchis depuis l'utilisateur (704 ; 914 ; 1106) ;
la détermination d'une distance relative par rapport à l'utilisateur (704 ; 914 ; 1106) sur la base de l'ensemble de signaux ; et
l'ajustement d'une ou de plusieurs caractéristiques d'une interface utilisateur (410 ; 510) sur le dispositif audio (479 ; 602) sur la base de la distance relative par rapport à l'utilisateur (704 ; 914 ; 1106) .

2. Procédé de fonctionnement pour le dispositif audio (479 ; 602) selon la revendication 1, dans lequel l'ajustement des une ou plusieurs caractéristiques comprend l'ajustement d'une taille de police de l'interface utilisateur (410 ; 510) sur la base de la distance relative par rapport à l'utilisateur (704 ; 914 ; 1106).

3. Procédé de fonctionnement pour le dispositif audio (479 ; 602) selon la revendication 1, dans lequel l'ajustement des une ou plusieurs caractéristiques comprend l'ajustement d'un volume audio de l'interface utilisateur (410 ; 510) sur la base de la distance relative par rapport à l'utilisateur (704 ; 914 ; 1106) .

4. Procédé de fonctionnement pour le dispositif audio (479 ; 602) selon la revendication 1, dans lequel l'ajustement des une ou plusieurs caractéristiques comprend l'activation d'un afficheur de l'interface utilisateur (704 ; 914 ; 1106) sur la base du fait que la distance relative par rapport à l'utilisateur (704 ; 914 ; 1106) se situe dans un seuil de distance prédéterminé.

5. Procédé de fonctionnement pour le dispositif audio (479 ; 602) selon la revendication 1, comprenant en outre :
la détermination du fait que la distance relative par rapport à l'utilisateur (704 ; 914 ; 1106) est dans une distance seuil prédéfinie du dispositif audio (479 ; 602).

6. Procédé de fonctionnement pour le dispositif audio (479 ; 602) selon la revendication 5, dans lequel l'ensemble de chirps ultrasonores est envoyé à une deuxième vitesse, qui est supérieure à une première vitesse à laquelle un premier ensemble de chirps ultrasonores a été envoyé, sur la base de la détermination du fait que la distance relative par rapport à l'utilisateur (479 ; 602) est dans la distance seuil prédéfinie du dispositif audio (479 ; 602).

7. Dispositif audio (479 ; 602), comprenant :
un ou plusieurs processeurs (402) ;
un microphone (480-1, 480-2) ;
un haut-parleur (482-1, 482-2) ; et
une mémoire stockant une ou plusieurs instructions qui, lorsqu'elles sont exécutées par les un ou plusieurs processeurs (402), amènent le dispositif audio (479 ; 602) à :
tout en communiquant de manière audible avec un utilisateur (704 ; 914 ; 1106) :
utiliser le haut-parleur (482-1, 482-2) et le microphone (480-1, 480-2) ;
envoyer un ensemble de chirps ultrasonores via le haut-parleur (482-1, 482-2) ;
recevoir, via le microphone (480-1, 480-2), un ensemble de signaux correspondant à l'ensemble de chirps ultrasonores et réfléchis depuis l'utilisateur (704 ; 914 ; 1106) ;
déterminer une distance relative par rapport à l'utilisateur (704 ; 914 ; 1106) sur la base de l'ensemble de signaux ; et
ajuster une ou plusieurs caractéristiques d'une interface utilisateur (410 ; 510) sur le dispositif audio (479 ; 602) sur la base de la distance relative par rapport à l'utilisateur (704 ; 914 ; 1106).

8. Dispositif audio (479 ; 602) selon la revendication 7, dans lequel les instructions qui amènent le dispositif audio (479 ; 602) à ajuster les une ou plusieurs caractéristiques comprennent des instructions pour ajuster une taille de police de l'interface utilisateur (410 ; 510) sur la base de la distance relative par rapport à l'utilisateur (704 ; 914 ; 1106).

9. Dispositif audio (479 ; 602) selon la revendication 7, dans lequel les instructions qui amènent le dispositif audio (479 ; 602) à ajuster les une ou plusieurs caractéristiques comprennent des instructions pour ajuster un volume audio de l'interface utilisateur (410 ; 510) sur la base de la distance relative par rapport à l'utilisateur (704 ; 914 ; 1106).

10. Dispositif audio (479 ; 602) selon la revendication 7, dans lequel les instructions qui amènent le dispositif audio (479 ; 602) à ajuster les une ou plusieurs caractéristiques comprennent des instructions pour activer un afficheur de l'interface utilisateur (410 ; 510) sur la base du fait que la distance relative par rapport à l'utilisateur (704 ; 914 ; 1106) se situe dans un seuil de distance prédéterminé.

11. Dispositif audio (479 ; 602) selon la revendication 7, dans lequel la mémoire stocke en outre des instructions qui, lorsqu'elles sont exécutées par les un ou plusieurs processeurs (402), amènent le dispositif audio (479 ; 602) à :
déterminer que la distance relative par rapport à l'utilisateur (704 ; 914 ; 1106) est dans une distance seuil prédéfinie du dispositif audio (479 ; 602).

12. Dispositif audio (479 ; 602) selon la revendication 11, dans lequel l'ensemble de chirps ultrasonores est envoyé à une deuxième vitesse, qui est supérieure à une première vitesse à laquelle un premier ensemble de chirps ultrasonores a été envoyé, sur la base de la détermination du fait que la distance relative par rapport à l'utilisateur (704 ; 914 ; 1106) est dans la distance seuil prédéfinie du dispositif audio (479 ; 602).

13. Support de stockage non transitoire lisible par ordinateur stockant un ou plusieurs programmes, les un ou plusieurs programmes comprenant des instructions qui, lorsqu'elles sont exécutées par un dispositif électronique avec un ou plusieurs processeurs, une mémoire, un microphone et un haut-parleur, amènent le dispositif électronique à réaliser l'un quelconque des procédés des revendications 1 à 6.
